(19) Europäisches Patentamt
European Patent Office
Office européen des brevets

(11) **EP 3 332 344 B1**

(12) **EUROPEAN PATENT SPECIFICATION**

(45) Date of publication and mention
of the grant of the patent:
**20.04.2022 Bulletin 2022/16**

(21) Application number: **16834009.9**

(22) Date of filing: **08.09.2016**

(51) International Patent Classification (IPC):
**G06F 8/65** *(2018.01)* **H04W 4/40** *(2018.01)*
**H04W 4/48** *(2018.01)* **H04W 4/80** *(2018.01)*

(52) Cooperative Patent Classification (CPC):
**G06F 8/65; H04L 67/12; H04W 4/40; H04W 4/48;
H04W 4/80**

(86) International application number:
**PCT/US2016/050730**

(87) International publication number:
**WO 2017/024320 (09.02.2017 Gazette 2017/06)**

(54) **METHODS FOR REAL TIME WIRELESS ECU MONITORING AND REPROGRAMMING**

VERFAHREN ZUR DRAHTLOSEN ECHTZEIT-EKG-ÜBERWACHUNG UND
-UMPROGRAMMIERUNG

PROCÉDÉS POUR SURVEILLER ET REPROGRAMMER UNE ECU SANS FIL EN TEMPS RÉEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2016 US 201615228926**

(43) Date of publication of application:
**13.06.2018 Bulletin 2018/24**

(73) Proprietor: **Gintz, Brad
Grand Cayman KY1-1003 (KY)**

(72) Inventor: **WOOD, Thomas
Grand Cayman KY1-1110 (KY)**

(74) Representative: **Forresters IP LLP
Skygarden
Erika-Mann-Straße 11
80636 München (DE)**

(56) References cited:
**US-A1- 2002 007 237    US-A1- 2010 292 890
US-A1- 2013 246 135    US-A1- 2015 007 155
US-A1- 2015 007 155    US-A1- 2015 180 840
US-B1- 8 781 442**

**Description**

**BACKGROUND**

An engine control unit or an "ECU" is a widely used type of electronic controller that controls a series of actuators on an internal combustion engine to ensure optimal engine performance. It does this by reading values of a multitude of sensors in the engine bay and interpreting the data it receives using lookup tables which adjust engine actuators appropriately.

The ECU monitors various sensors on the automobile such as sensors for oxygen level, coolant temperature, mass air flow, air intake temperature, crank shaft angle, throttle position, cam shaft angle and engine knock. Lookup tables provide feedback information for adjustment and control of ignition timing, cam shaft position, fuel injector input, fuel pump input, fuel pump pressure, cooling fan speed, admission control systems, forced air induction controls, traction controls and transmission gear selections. In many situations, ECUs also send error codes to the vehicle dashboard to indicate immediate problems, such as overheating, or maintenance requirements, like oil changes. In some cases, the error codes activate warning lights which must be deactivated by the dealer.

Certain classes of ECUs are programmable. Modern ECUs incorporate a microprocessor which can process inputs from engine sensors in real time. The microprocessor stores its programming in firmware which is resident in flash memory or e-proms attached to the CPU of the microprocessor.

Programmable ECUs are required, for example, where significant aftermarket performance enhancing modifications have been made. Such modifications often include the addition of a turbo charger, intercooler or modified exhaust system. Programmable ECU's are also used for several vehicle systems, such as engine control module (ECM), transmission control module (TCM), body control module, anti-lock brake system (ABS), airbag control module, and so on, that each receive routine updates from the manufacturer of the vehicle. Each ECU is remapped or reprogrammed to adapt the performance of the involved system to match the required modifications and/or to update the software and parameters of the ECU. Other changes for high performance engines which can be remapped in an ECU include ignition timing, maximum RPM, water temperature correction, transient fueling, low fuel pressure modifiers and a closed loop lambda (in order to modify a target air/fuel ratio), turbo charger waste gate control, staged fuel injection, variable cam timing, gear control and turbo charger anti-lag.

US-A-2015/0007155 discloses a conventional vehicle module updating device. US 2010/292890 discloses a vehicle rules engine. US 2015/180840 discloses a firmware upgrade method. US 2002/007237 discloses a system for vehicle diagnosis.

**SUMMARY**

According to one aspect of the present invention, there is provided a method as defined in claim 1 hereinafter.

According to another aspect of the present invention, there is provided a method as defined in claim 8 hereinafter.

According to a further aspect of the present invention, there is provided a method as defined in claim 11 hereinafter.

**BRIEF DESCRIPTION OF THE DRAWINGS**

Figure 1 is a system diagram of a cloud based automotive technician system.
Figure 2A is a sequence diagram of a method for updating parameters on an automotive controller.
Figure 2B is a sequence diagram of a method for interaction with an automotive controller and a client device.
Figure 3 is a block diagram of a cloud based automotive technician system.
Figures 4A and 4B are a sequence diagrams of a method for updating an automotive controller based on data from the automotive controller.
Figure 5A is a diagram of a user interface of a preferred embodiment for a multiple gauge view with eight gauges.
Figure 5B is a diagram of a user interface of a preferred embodiment for dragging and dropping a gauge.
Figures 6A, 6B, and 6C are diagrams of a user interface of a preferred embodiment for a multiple gauge view with four sliding gauges.
Figures 7A, 7B, and 7C are diagrams of a user interface of a preferred embodiment for selecting a gauge.
Figures 8A and 8B are diagrams of a user interface of a preferred embodiment for selecting a first gauge style.
Figures 9A and 9B are diagrams of a user interface of a preferred embodiment for selecting a second gauge style.
Figures 10A and 10B are diagrams of a user interface of a preferred embodiment for selecting a third gauge style.
Figures 11A and 11B are diagrams of a user interface of a preferred embodiment for selecting a fourth gauge style.

Figures 12A through 12I are diagrams of a user interface of a preferred embodiment for adjusting parameters.
Figures 13A and 13B are diagrams of a user interface of a preferred embodiment for selecting units of a gauge.
Figures 14A through 14E are diagrams of a user interface of a preferred embodiment for a multiple gauge view with five gauges.
Figures 15A through 15D are diagrams of a user interface of a preferred embodiment for selecting gauges for a multiple gauge view.
Figures 16A through 16E are diagrams of a user interface of a preferred embodiment for vehicle management.
Figures 17A through 17C are diagrams of a user interface of a preferred embodiment for displaying diagnostics.
Figures 18A and 18B are diagrams of a user interface of a preferred embodiment for data log management.
Figures 19A through 19D are diagrams of a user interface of a preferred embodiment for settings management.
Figures 20A through 20D are diagrams of databases and records of a preferred embodiment.
Figure 21 is a block diagram of a local device of a preferred embodiment.

## DETAILED DESCRIPTION

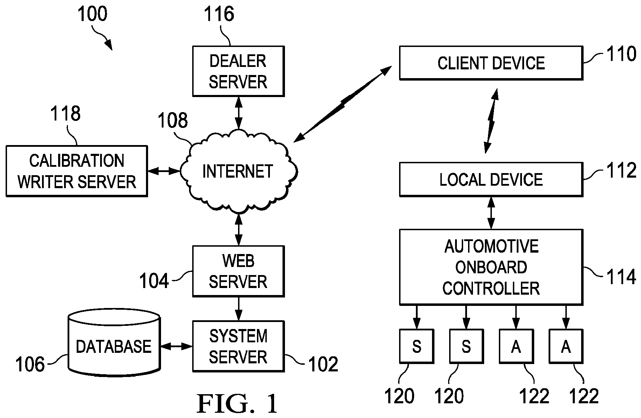

Referring to Figure 1, system **100** is provided. System **100** includes system server **102** connected to Internet **108** through web server **104**. The system server also includes database **106**.

Client device **110** is connected through a mobile network to Internet **108**. Client device **110** is also connected to local device **112**. In a preferred embodiment the local device establishes a Wi-Fi or Bluetooth connection between the client device and the automobile. Local device **112** is hardwired to the automotive controller **114**. Automotive controller **114** is connected to sensors **120** and actuators **122** resident on the vehicle. The sensors and actuators communicate with the onboard controller through a CAN BUS (also known as a controller area network (CAN) bus) as is known in the art.

Client device **110**, acts as a client of system server **102**, and as a client of local device **112**. Embodiments of client device **110** include any handheld wireless device, such as, a smart phone, a tablet computer, a notebook computer, a netbook computer, and so on.

Dealer server **116** is also connected to Internet **108** and communicates through the Internet to both the system server and the local device. Similarly, calibration writer server **118** is connected through the Internet to system server **102** and client device **110.**

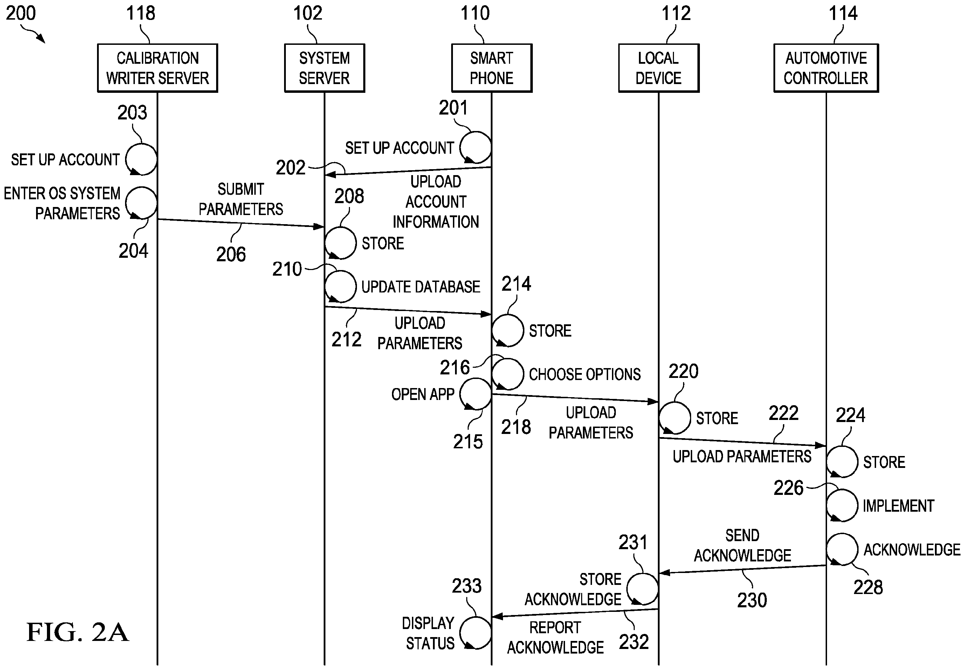

Referring to Figure 2A, operation of a preferred embodiment **200** will be described. In use, the device allows recording and viewing of automobile information, diagnostics, automobile updates for onboard computers, and data logging to allow study of driving habits to research fuel economy.

At step **201,** the client device opens the application and sets up an account by entering certain demographic information. At step **202,** the application uploads the account information to system server **102.**

At step **203,** the calibration writer server sets up an account through a form served up through the Internet from the system server. The calibration writer server includes account information such as name, address, email address, and submit computer Cal/Pid. At step 204, calibration writer server inputs a set of operating system parameters which include programming information and look up tables for the onboard controller. At step **206,** the parameters are submitted to system server **102**. At step **208,** system server **102** stores the parameters and the account implementation. At step **210,** the database is updated by the system server with the new parameters and associated with the calibration writer server. At step **212,** the system server uploads the parameters to client device **110** via a wireless network.

In an alternative embodiment, a technician downloads the parameters or firmware from calibration writer server **118** via a web browser. The technician then uses system server 102 to download the updated parameters or firmware to smart phone **110.**

At step **214,** a client device stores the parameters. At step **215,** client device opens an application (or "App") which displays the parameters and certain options to the user. At step **216,** the client device receives options from the user as to which parameters to implement. At step **218,** the chosen parameters are uploaded to the local device via a Wi-Fi or Bluetooth connection. At step **220,** the local device stores the parameters and initiates certain timing functions such as onboard recording and storage of data.

At step **222,** the chosen parameters are uploaded to the automotive controller. At step **224,** the automotive controller stores the new parameters and lookup tables. At step **226** the automotive controller implements the new parameters and lookup tables. At step **228,** the automotive controller generates an acknowledge signal. At step **230,** the acknowledge signal is sent to the local device. At step **231,** the local device stores the acknowledge signal. At step **232,** the local device reports the acknowledge signal to client device **110** via the WiFi or Bluetooth connection. At step **233,** the client device stores the acknowledge signal and the App displays the status of the local device and the uploaded parameters.

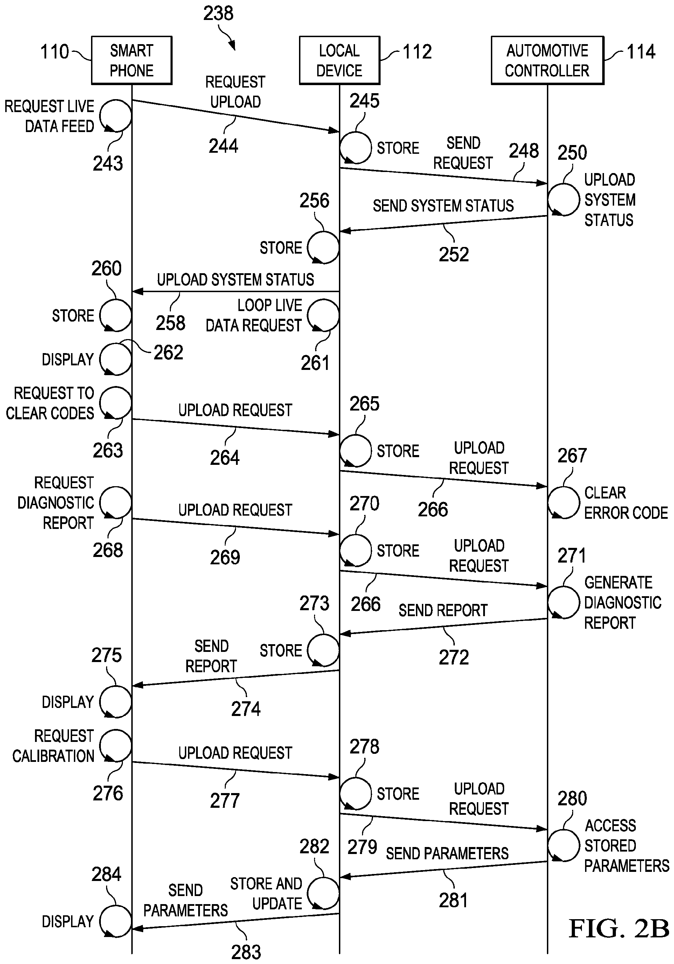

Referring to Figure 2B, an alternate preferred embodiment **238** is described. At step **243,** the client device chooses a target for a feed of live data from the automotive controller. Step **244,** the client device transmits the request to the local device. At step **245,** the local device stores live data request. At step **248,** the local device sends a request for live data to automotive controller **114.** At step **252,** the system status is sent to the local device. At step **256,** the local device stores the system status. At step **258,** the local device uploads the system status to client device **110.** At step **250,** the automotive controller uploads the system status from the automobile to the local device. At step **260,** client device stores the system status. At step **262,** the App displays the system status. The display is refreshed as updated system status is received from the local device. At step **261,** the local device enters a loop to repeatedly request system status from the automotive controller.

At step **263,** client device **110** chooses an option on the application to clear error codes. At step **264,** the request is uploaded to the local device. At step **265,** the request is stored in memory on the local device. At step **266,** the request is uploaded to the automotive controller. At step **267,** the automotive controller acknowledges the request and clears the error code.

At step **268,** the client device chooses an option on the application to request a diagnostic report. At step **269,** the request is uploaded to the local device. At step **270,** the local device stores the request. At step **266,** the local device uploads the request to the automotive controller. At step **271,** the automotive controller generates the diagnostic report. At step **272,** the diagnostic report is sent to the local device. At step **273,** the local device stores the diagnostic report, according to date and time, in memory. At step **274,** the diagnostic report is sent to the client device. At step **275,** the diagnostic report is displayed according to the request of the user.

At step **276,** the client device, through use of the application requests a calibration report. At step **277,** the calibration request is uploaded to the local device. At step **278,** the local device stores the request for calibration. At step **279,** the local device forwards the request to the automotive controller. At step **280,** the automotive controller accesses the currently stored parameters and the calibration. At step **281,** the parameters are sent to the local device. At step **282,** the local device stores the current set of parameters according a date and time stamp. At step **283,** the local device sends the parameters to the client device. At step **284,** the application on the client device displays the requested calibration parameters.

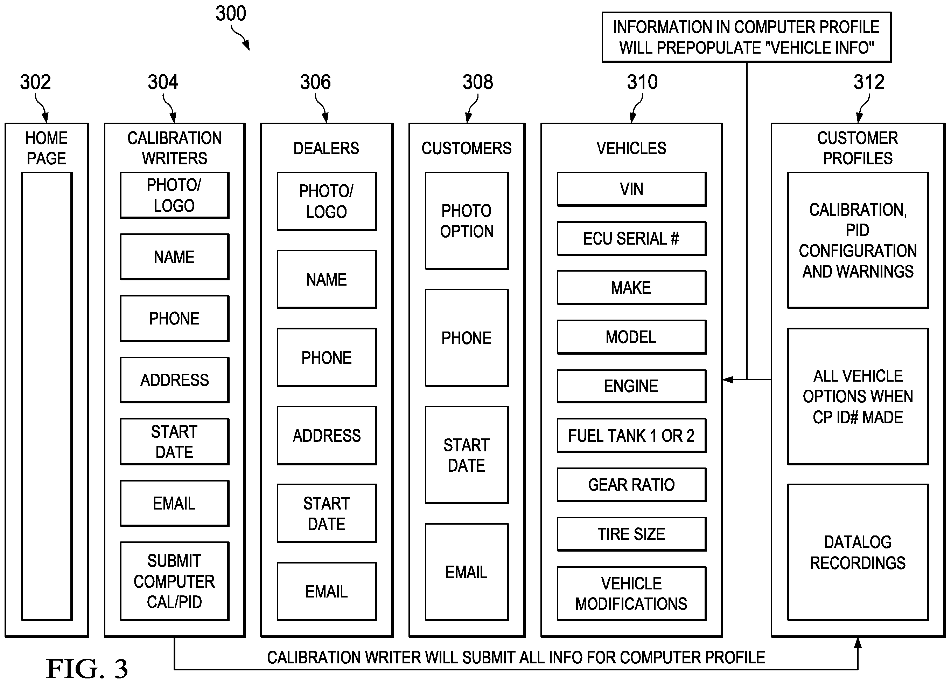

Referring to Figure 3, a schematic map **300** of the setup of system server **102** and certain functions of a preferred embodiment will be described.

System server **102** presents a set of webpages for the various users of the system through web server **104** using a user/password interface. At **302, 304,** and **306** a schematic of the local home page is shown. Local home page provides options for a choice of a user type for each of calibration writer server, a dealer, and a customer or "end user." The database includes records for each vehicle **310** and each computer profile ID number **312.** Each record 310 includes vehicle identification number, ECU serial number, make, model, engine, fuel tank number, gear ratio, tire size and vehicle modification categories. Each record is associated with a particular vehicle entered into the system. Computer profile ID number **312** is a database entry including vehicle, calibration, PID configuration, and warning type. Computer profile ID number 312 also includes vehicle options and datalog recordings for each vehicle.

Calibration writers webpage **304** includes forms for entry of a data record for users who input engine control parameters. Each data record includes entries for photos or logos, name, phone, address, start date, email and computer Cal/Pid. When the form is complete, upon entry, system server **102** enters the data from the data form into a record into the database. The system server then copies the data record into computer profiles ID number **312.** All reports generated by the automotive controller at the request of the local device are associated with current calibration of the vehicle when stored in memory. In a preferred embodiment, the data in the record is then copied directly into memory at vehicles **310.**

The dealers webpage **306** serves up a form for data entry including data related to photo/logo, name, phone, address, start date and email address. The "dealers" in a preferred embodiment are typically maintenance shops which service vehicles but do not write calibrations.

The customers webpage **308** includes a form for entry of data regarding photo, phone number, start date and email address. The web form also enables the customer to request download of an application to be locally installed. The APP GUI provides access to the functions of the local device. In a preferred embodiment, the functions include requesting a report of a current calibration, requesting a live report of engine status, requesting a diagnosis report, requesting that an error code be cleared and uploading a calibration update from a dealer or manufacturer.

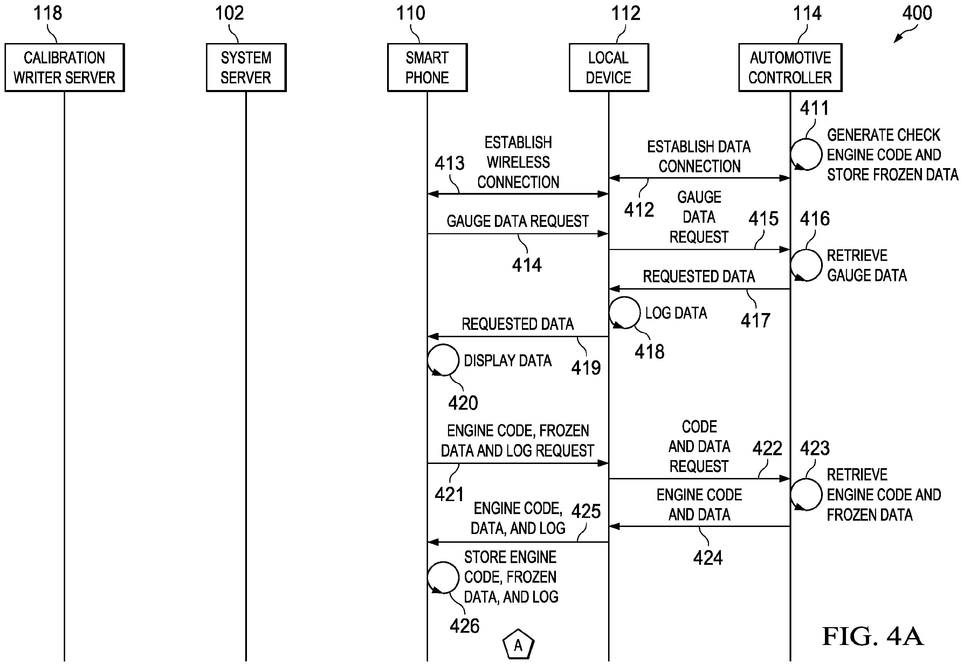

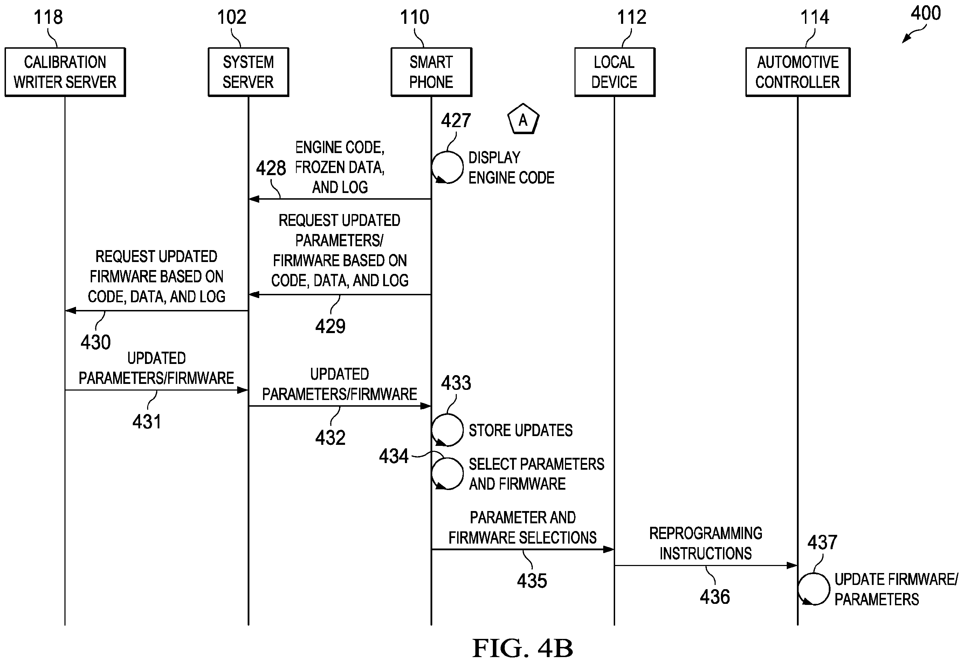

Figures 4A and 4B show sequence diagrams of a method for updating an automotive controller based on data from the automotive controller.

A preferred embodiment of local device **112** includes the Freescale IMX28 Microcontroller, a UART for translation between parallel and serial data forms, Wi-Fi connectivity employing the IEEE 802.11 standard or other wireless protocol for communication between client device **110** and the local device **112** and provisions for a local interconnect network LIN for communication between vehicle components and a CAN BUS for communication between microcontrollers and other devices.

Referring to Figures 4A and 4B, method **400** updates engine parameters in response to a check engine code (also referred to as a diagnostic trouble code (DTC)) being generated by automotive controller **114.** The method includes one or more messages passed between calibration writer server **118,** system server **102,** client device **110,** local device **112,** and automotive controller **114.**

At step **411,** automotive controller **114** generates a check engine code and freezes a frame of data. The check engine code identifies a problem with the vehicle. The frozen data indicates the status of the vehicle at the time when the problem that caused the check engine code to be generated occurred.

At step **412,** a data connection is established between local device **112** and automotive controller **114.** In one embodiment, the data connection is established by connecting local device **112** to an onboard diagnostics port that is connected to a CAN BUS to which automotive controller **114** is connected.

At step **413,** a wireless connection is established between client device **110** and local device **112.** In one embodiment, local device **112** acts as a wireless local area network (WLAN) access point to which client device **110** can connect. In establishing the wireless connection, transmission control protocol (TCP) socket is opened between client device **110** and local device **112** so that data can be passed back and forth between client device **110** and local device **112** using JavaScript Object Notation (JSON) messages.

At step **414,** a request for gauge data is sent from client device **110** and is received by local device **112.** In one embodiment, the request is sent using JSON using the TCP socket. For each of the one or more gauges displayed by client device **110,** a gauge data request is sent. After receiving the request from client device **110** by local device **112,** client device **110** is subscribed to and receives notifications from local device **112** that include updated data to be displayed on the gauge associated with the gauge data request.

At step **415,** a data request is sent from local device **112** and is received by automotive controller **114.**

At step **416,** automotive controller **114** retrieves the gauge data. In one embodiment, automotive controller **114** retrieves parameter identifier (PID) data that is associated with the gauge data.

At step **417,** the data is sent from automotive controller **114** and is received by local device **112.**

Optionally at step **418,** local device **112** records the data received from automotive controller **114** in a log file on local device **112.**

At step **419,** the requested data is sent from local device **112** and is received by client device **110.** In one embodiment, client device **110** is subscribed to local device **112** so as to receive a notification from local device **112** each time local device **112** receives updated data from automotive controller **114.**

At step **420,** the data is displayed by client device **110.** The layout settings that describe the look and feel of the gauge are stored on client device **110** and the data is displayed in accordance to the layout settings.

At step **421,** a request for the engine code, the frozen data, and optionally the log data is sent from client device **110** and is received by local device **112.**

At step **422,** a request for the engine code and the frozen data is sent from local device 112 and is received by automotive controller **114.**

At step **423,** automotive controller **114** retrieves the engine code and frozen data that were generated in step **411.**

At step **424,** the engine code and frozen data are sent from automotive controller 114 and are received by local device **112.**

At step **425,** the engine code, frozen data, and optional log are sent from local device 112 and are received by client device **110.**

At step **426,** client device **110** stores the engine code, frozen data, and optional log.

At step **427,** client device **110** displays the engine code.

At step **428,** the engine code, frozen data, and optional log is sent from client device **110** and is received by system server **102.**

At step **429,** a request for updated engine parameters is sent from client device **110** and is received by system server **102.**

At step **430,** a request for updated engine parameters is sent from system server **102** and is received by calibration writer server **118.**

At step **431,** updated parameters and/or firmware are sent from calibration writer server **118,** and are received by system server **102.**

At step **432,** the updated parameters and firmware are sent from system server 102 and are received by client device **110.**

At step **433,** the updated parameters and firmware are stored on client device 110.

At step **434,** the technician selects one or more parameters and firmware with which to update the vehicle.

At step **435,** the selected parameters and firmware are sent from client device **110** and are received by local device **112.** One or more parameters and the firmware may be selected to be updated and are sent.

At step **436,** reprogramming instructions are sent from local device **112** and are received by automotive controller **114.** In one embodiment, the instructions cause automotive controller **114** to be flashed with the updated firmware when the firmware is selected to be updated. Additionally, parameters can be changed beyond what was included with the updated firmware. The updated firmware may be the latest default firmware from the vehicle manufacturer that does not have every parameter tuned for the specific configuration of the vehicle. In one embodiment, the reprogramming instructions of local device **112** first reflashes automotive controller **114** with the updated firmware and then updates specific engine tuning parameters.

At step **437,** automotive controller **114** updates the firmware and parameters to the values received from local device **112.**

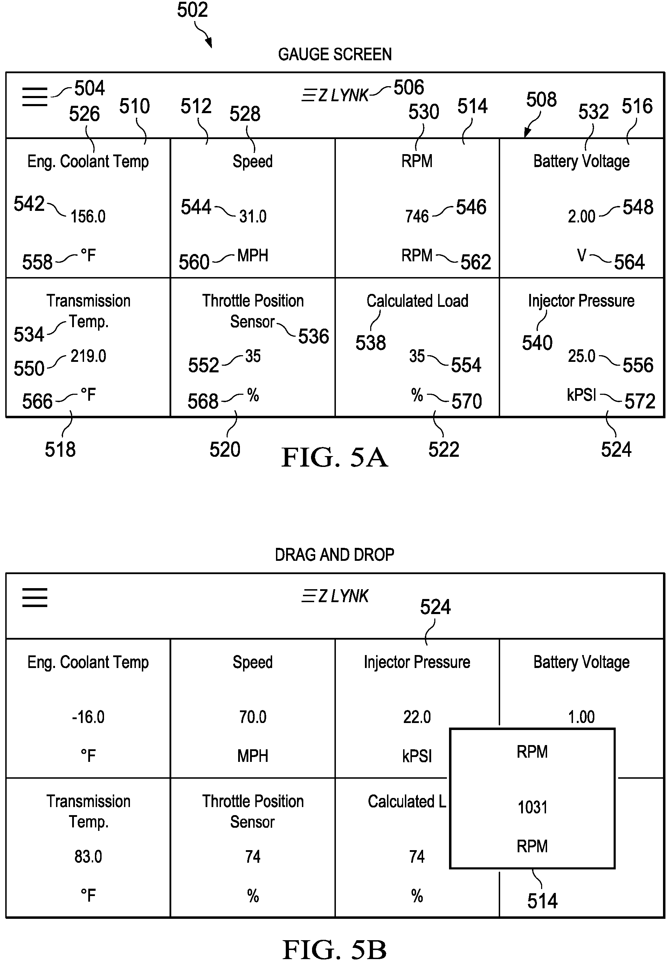

Referring to Figures 5A and 5B, user interface **502** includes menu button **504** on title bar **506,** which is above multiple gauge view **508.** Multiple gauge view **508** includes eight (8) mini gauge views **510, 512, 514, 516, 518, 520, 522,** and **524.**

User interface **502** is displayed on a client device via an app running on the client device. The name, value, and units of each respective mini gauge **510, 512, 514, 516, 518, 520, 522,** and **524** are displayed on user interface **502** on a client device. Values **542, 544, 546, 548, 550, 552, 554,** and **556** respectively of each mini gauge **510, 512, 514, 516, 518, 520, 522,** and **524** are continuously updated as new PID values are received from the automotive controller. In the embodiment of Figure 5A, ten (10) PIDs are named with the units indicated in the table below. PID values, names, and units may be different for different vehicles and the table below is merely one example

| PID | Mini Gauge View | Name | Units |
|---|---|---|---|
| 0 | **510** | Engine Coolant Temperature | Degrees Fahrenheit (°F) |
| 1 | **512** | Speed | Miles per Hour (MPH) |
| 2 | **530** | Revolutions per Minute | Revolutions per Minute (RPM) |
| 3 | **532** | Battery Voltage | Voltage (V) |
| 4 | **518** | Transmission Temperature | Degrees Fahrenheit (°F) |
| 5 | (not shown) | Boost | Pounds per Square Inch (PSI) |
| 6 | **522** | Calculated Load | Percent of Max (%) |
| 7 | **524** | Injector Pressure | Thousand Pounds per Square Inch (kPSI) |
| 8 | (not shown) | Injector Pulse Width | Milliseconds (ms) |
| 9 | **520** | Throttle Position Sensor | Percent of Max (%) |

Mini gauge view **510** includes name **526,** value **542,** and units **558** and is associated with a PID. Name **526** indicates that mini gauge **510** displays the engine coolant temperature, which value **542** indicates is at **156.**0, which units **558** indicates are in degrees Fahrenheit. Mini gauge view **510** is shaded in a green color to indicate that value **542** is within a desired range for the engine coolant temperature.

Mini gauge view **512** includes name **528,** value **544,** and units **560** and is associated with a PID. Name **528** indicates that mini gauge **512** displays the speed, which value **544** indicates is at 31.0, which units **560** indicates are in miles per hour. Mini gauge view **512** is not shaded green, which would indicate that value **544** is in a desired range, and is not shaded red, which would indicate that value **544** is in a warning range.

Mini gauge view **514** includes name **530,** value **546,** and units **562** and is associated with a PID. Name **530** indicates that mini gauge **514** displays the revolutions per minute (RPM) of the engine, which value **546** indicates is at 31.0, which units **562** indicates are in revolutions per minute. Mini gauge view **514** is not shaded green, which would indicate that value **546** is in a desired range, and is not shaded red, which would indicate that value **546** is in a warning range.

Mini gauge view **516** includes name **532,** value **548,** and units **564** and is associated with a PID. Name **532** indicates that mini gauge **516** displays the battery voltage of the engine, which value **548** indicates is at 2.00, which units **564** indicates are in Volts (V). Mini gauge view **516** is shaded red to indicate that value **548** is within a warning range for the battery voltage.

Mini gauge view **518** includes name **534,** value **550,** and units **566** and is associated with a PID. Name **534** indicates that mini gauge **518** displays the transmission temperature of the engine, which value **550** indicates is at **219.**0, which units **566** indicates are in degrees Fahrenheit. Mini gauge view **518** is shaded red to indicate that value **550** is within a warning range for the transmission temperature.

Mini gauge view **520** includes name **536,** value **552,** and units **568** and is associated with a PID. Name **536** indicates that mini gauge **520** displays the throttle position sensor, which value **552** indicates is at 35, which units **568** indicates is a percentage value. Mini gauge view **520** is not shaded green, which would indicate that value **552** is in a desired range, and is not shaded red, which would indicate that value **552** is in a warning range.

Mini gauge view **522** includes name **538,** value **554,** and units **570** and is associated with a PID. Name **538** indicates that mini gauge **522** displays the calculated load on the engine, which value **554** indicates is at 35, which units **570** indicates is a percentage value. Mini gauge view **522** is not shaded green, which would indicate that value **554** is in a desired range, and is not shaded red, which would indicate that value **554** is in a warning range.

Mini gauge view **524** includes name **540,** value **556,** and units **572** and is associated with a PID. Name **540** indicates that mini gauge **524** displays the injector pressure of the engine, which value **556** indicates is at 25.0, which units **572** indicates is in thousand pounds per square inch (kPSI). Mini gauge view **524** is shaded green to indicate that value **556** is in a desired range.

Figure 5B shows a drag and drop operation used to swap the location of two mini gauges on multiple gauge view **508**. The location of mini gauge **514** is swapped with the location of mini gauge **524** within multiple gauge view **508** by dragging mini gauge **514** from its original location towards the original location of mini gauge **524.**

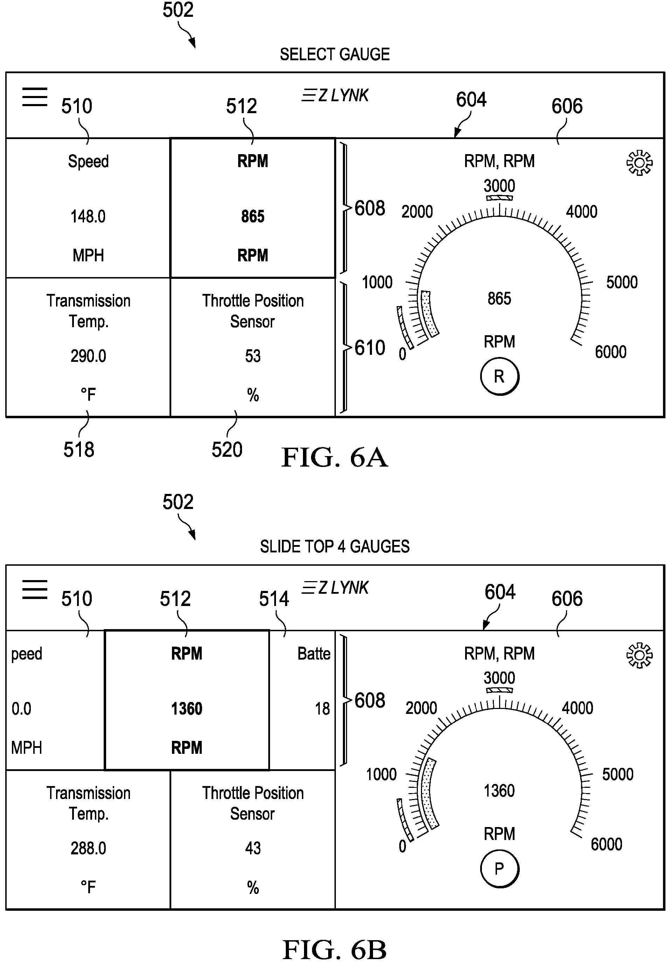

Referring to Figure 6A, user interface 502 is updated to display multiple gauge view **604**. Multiple gauge view **604** includes four (4) mini gauge views **(512, 530, 518,** and **520)** and one selected gauge view **606**. Mini gauge **530** is updated to have its display be highlighted to indicate that gauge **530** is associated with, and has the same PID as, selected gauge **606**. User interface **502** transitions from multiple gauge view **508** (eight gauge view **508**) to multiple gauge view **604** (four gauge view **604**) when gauge **530** is selected from multiple gauge view **508** via a touch or click event.

Upper row **608** includes mini gauges **510** and **512**. Lower row **610** includes mini gauges **518** and **520**.

Referring to Figure 6B, upper row **608** is slid or dragged to the left to reveal mini gauge **516**. Any two adjacent mini gauge views **510, 512, 514,** and **516** can be displayed in upper row **608** by sliding or dragging upper row **608** left or right. During a drag or slide event, up to three mini gauge views may be displayed. After the drag or slide event, two mini gauge views are displayed, which need not include the mini gauge that has been selected (which in Figure 6B is mini gauge **512)**.

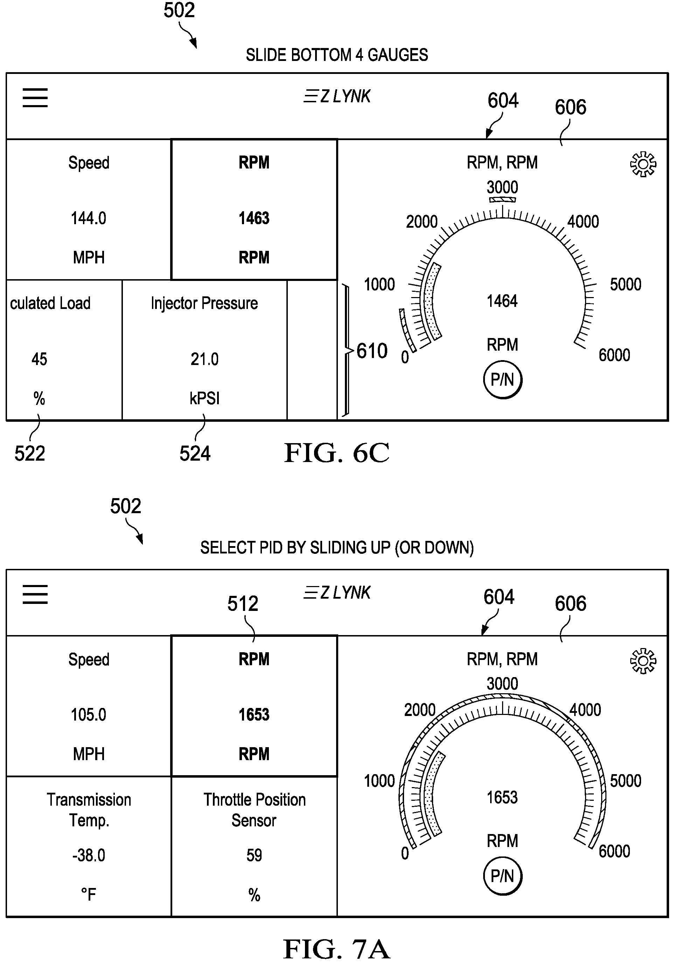

Referring to Figure 6C, lower row **610** is slid or dragged to the left. Any two adjacent mini gauge views **518, 520, 522,** and **524** can be displayed in lower row **610** by sliding or dragging lower row **610** left or right. During a drag or slide event, up to three mini gauge views may be displayed. After the drag or slide event, two mini gauge views are displayed, which need not include the mini gauge that has been selected.

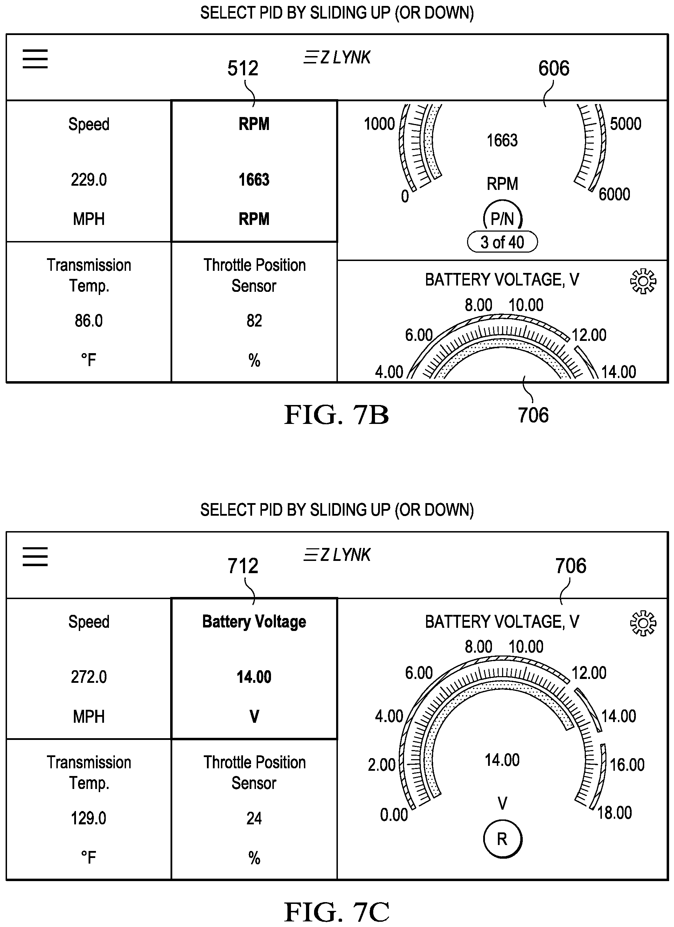

Referring to Figure 7A, 7B, and 7C, user interface **502** is manipulated to change the PID of mini gauge view **530**.

At Figure 7A, multiple gauge view **604** is displayed on user interface **502**. Mini gauge view **530** has been selected and selected gauge view **606** is shown on user interface **502.**

At Figure 7B, selected gauge view is slid or dragged up to reveal second selected gauge view **706.**

At Figure 7C, mini gauge view **512** is updated to become mini gauge view **712**. In on embodiment, mini gauge view **712** duplicates the information from mini gauge view **532** so that when mini gauge view **712** is unselected and user interface **502** transitions back to multiple gauge view **508,** both mini gauge view **532** and mini gauge view **712** are displayed and both show the battery voltage.

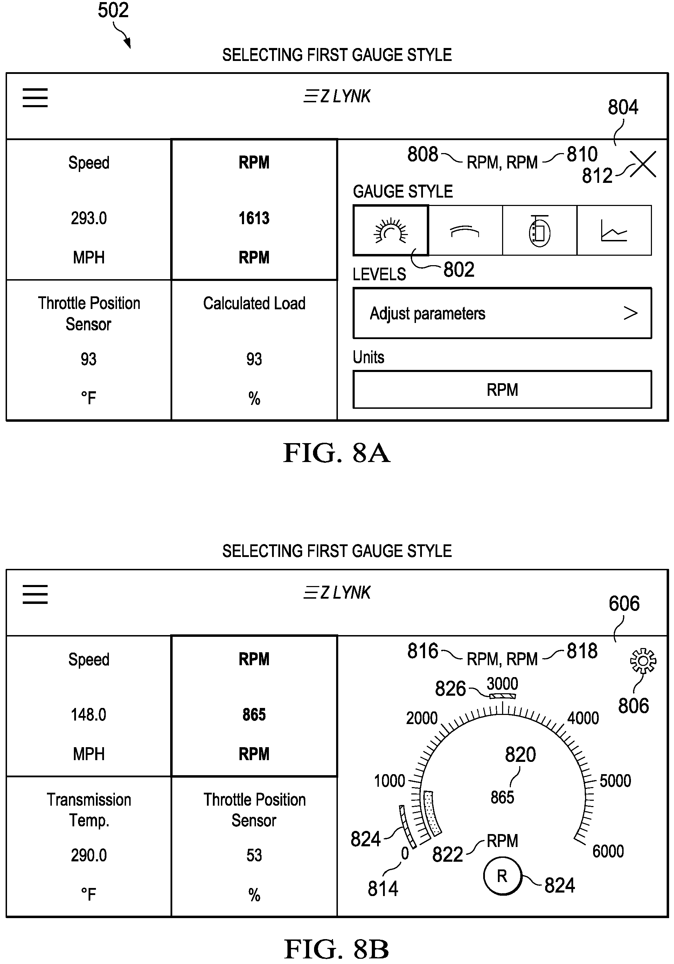

Referring to Figures 8A and 8B, circular gauge style **802** from settings view 804 is selected for selected gauge view **606**. Settings view **802** of Figure 8A is displayed after user interface element **806** is selected from selected gauge view **606** of Figure 8B.

Settings view **804** includes name **808** and units **810** that identify the name and units of the PID that is associated with selected view **606**. Settings view **804** includes user interface element **812** that, when selected, transitions user interface **502** from displaying settings view **804** (Figure 8A) to displaying settings view **606** (Figure 8B). With the selection of circular gauge style **802,** circular gauge view **814** will be shown on selected gauge **606.**

On selected gauge view **606,** name **816** and units **818** that identify the name and units of the PID that is associated with selected view **606**. Value **820** indicates the current value of the PID associated with selected gauge view **606**. Units **822** indicates the current value of the PID associated with selected gauge view **606**. User interface element **824** indicates what gear is being reported by the automotive controller as the current gear of the vehicle.

Circular gauge view **814** includes warning section **824**. In one embodiment, warning section **824** is shaded in red and indicates that the RPM level is too low.

Circular gauge view **814** includes desired section **826**. In one embodiment, desired section **826** is shaded in green and indicates that the RPM level is in a desired operating range for the vehicle.

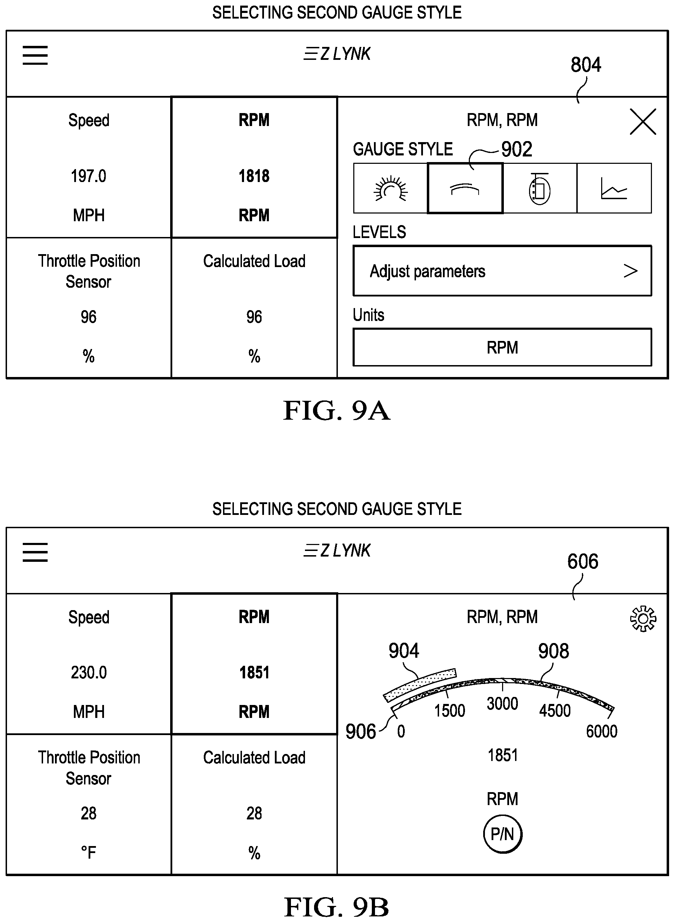

Referring to Figures 9A and 9B, arc gauge style **902** from settings view **804** is selected for gauge view **606**. When arc gauge style **902** is selected, selected gauge view **606** shows arc gauge view **904**. Arc gauge view **904** includes warning section **906**. In one embodiment, warning section **906** is shaded in red and indicates that PID values that are within warning section **906** are too low.

Arc gauge view **904** includes desired section **908**. In one embodiment, desired section **908** is shaded in green and indicates that PID values that are within desired section **908** are in a preferred range for one of maximum torque or horsepower.

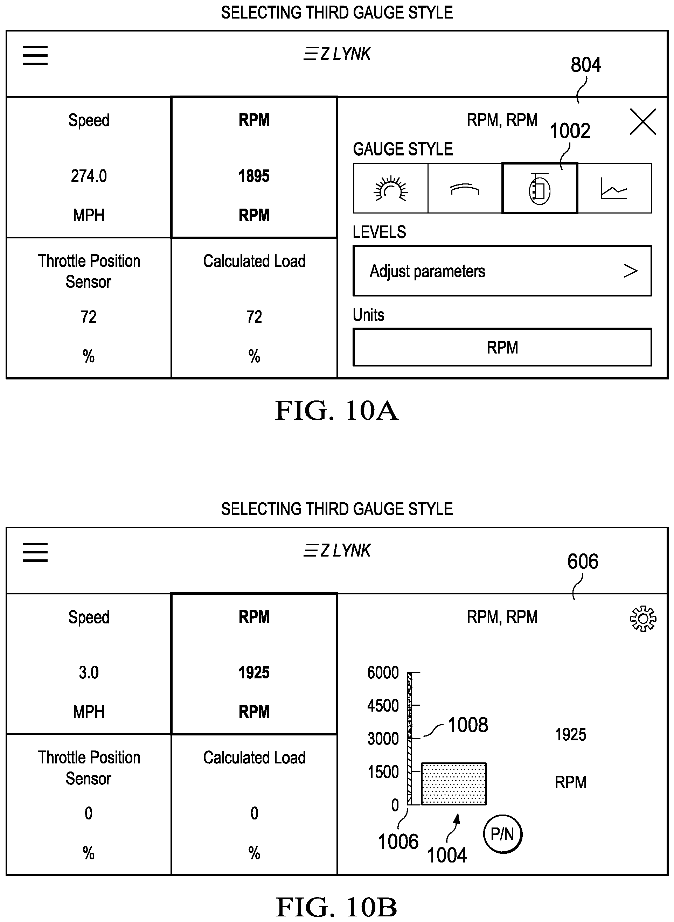

Referring to Figures 10A and 10B, bar gauge style **1002** from settings view **804** is selected for gauge view **606**. When bar gauge style **1002** is selected, selected gauge view **606** shows bar gauge view **1004**. Bar gauge view **1004** includes warning section **1006**. In one embodiment, warning section **1006** is shaded in red and indicates that PID values that are within warning section **1006** are too low.

Bar gauge view **1004** includes desired section **1008.** In one embodiment, desired section **1008** is shaded in green and indicates that PID values that are within desired section **1008** are in a preferred range for one of maximum torque or horsepower.

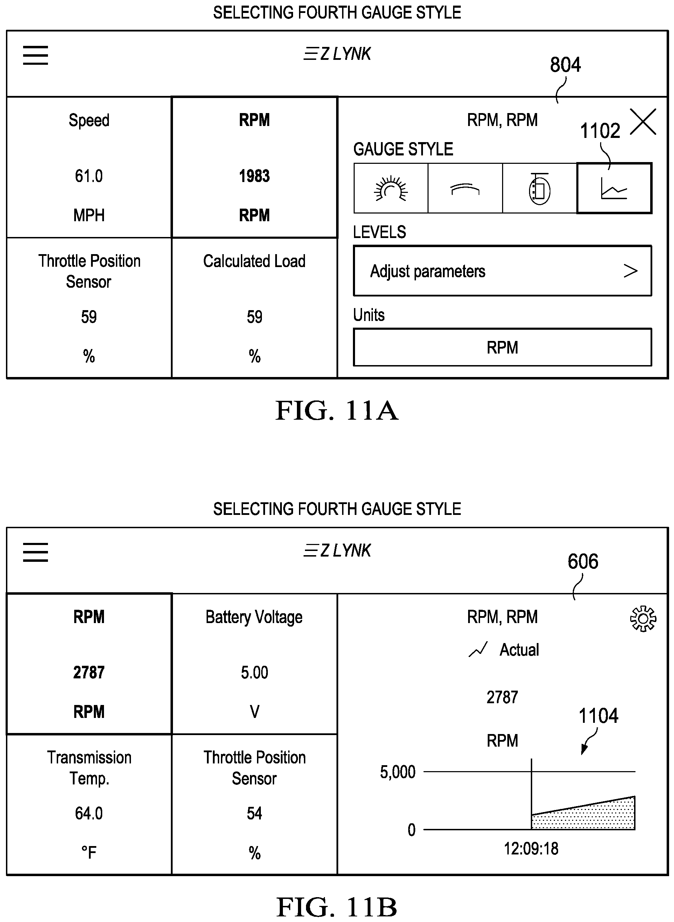

Referring to Figures 11A and 11B, line history gauge style **1102** from settings view **804** is selected for gauge view **606.** When line history gauge style **1102** is selected, selected gauge view **606** shows line history gauge view **1104.** Line history gauge view **1104** is a graph that shows recent values for the selected gauge as a function of time. The recent values are stored on the client device. Line history gauge view **1104** shows the most recent data on the right-hand-side of the chart.

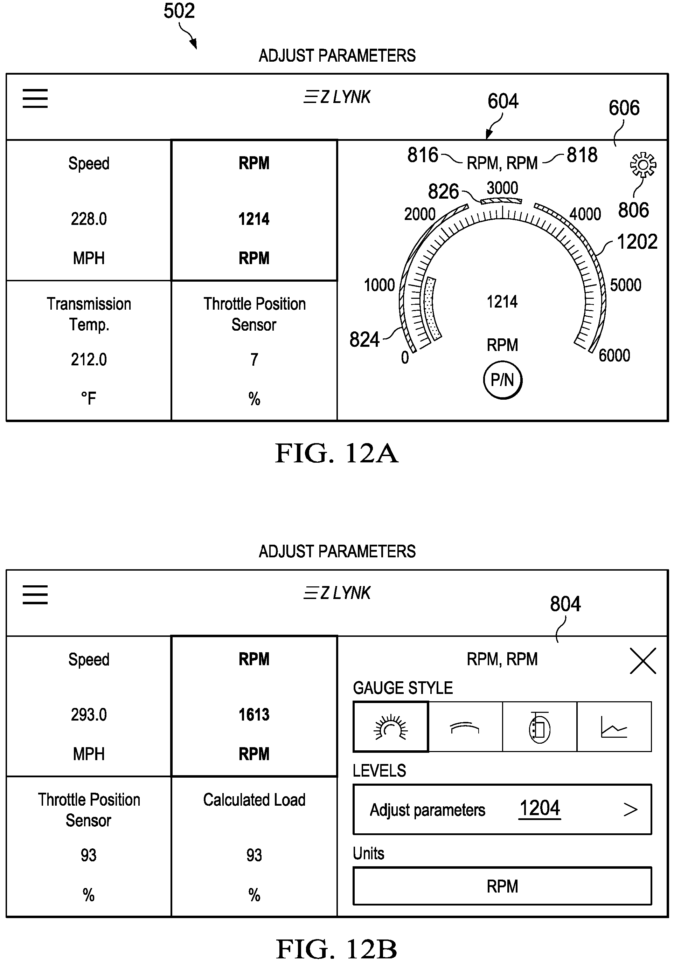

Referring to Figures 12A through 12I, user interface **502** comprises multiple gauge view **604** with selected gauge view **606.** Selected gauge view **606** includes warning section **824,** desired section **826,** and warning section **1202** that are each adjustable. Warning section **824** identifies when the PID value is too low and warning section **1202** identifies when the PID value is too high.

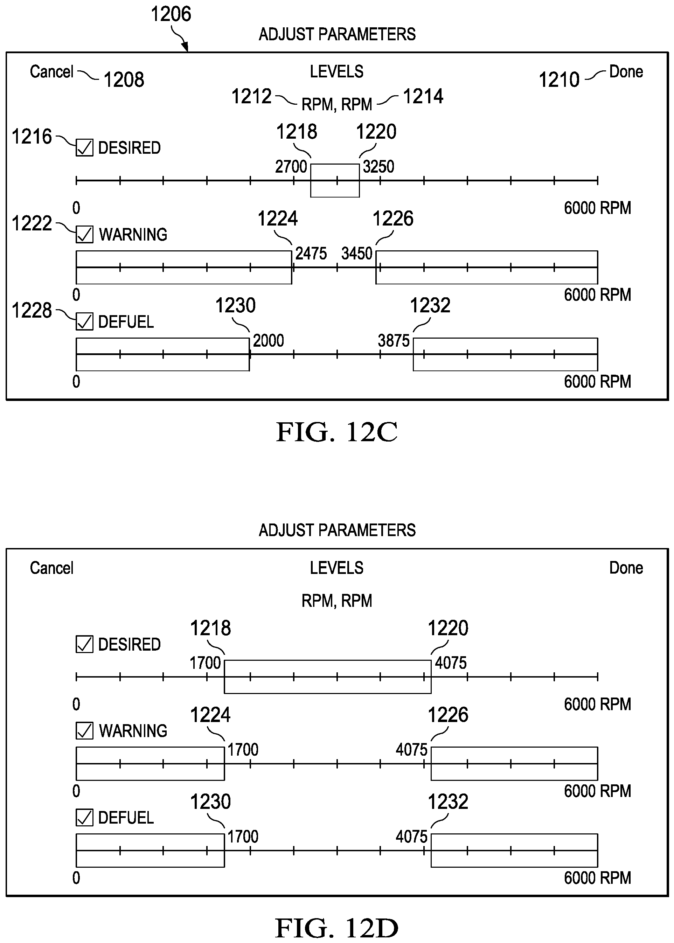

To adjust the settings for warning section **824,** desired section **826,** and warning section **1202,** user interface element **806** is selected to display settings view **804** (Figure 12B) and then user interface element **1204** is selected from settings view **804** to display view **1206** (Figure 12C) on user interface **502.** View **1206** is also referred to as parameter adjustment view **1206.**

Parameter adjustment view **1206** includes user interface element **1208,** user interface element **1210,** name **1212,** and units **1214**

User interface element **1208** is a cancel button that, when selected, undoes changes that were made in parameter adjustment view **1206.** After selecting user interface element **1208,** user interface **502** returns to multiple gauge view **604** with settings view **804,** as in Figure 12B.

User interface element **1210** is a button that, when selected, accepts changes that were made in parameter adjustment view **1206.** After selecting user interface element **1210,** user interface **502** returns to multiple gauge view **604** with settings view **804,** as in Figure 12B.

Name **1212** and units **1214** identify the type and units of the PID information that is displayed on view **1206.** In one embodiment, name **1212** is revolutions per minute (RPM) and units **1214** are RPM.

User interface element **1216** is a checkbox that indicates whether desired section **826** is shown on selected gauge view **606.** The range of desired section **826** is controlled by the range between minimum desired threshold **1218** and maximum desired threshold **1220.** When the PID value is between minimum desired threshold **1218** and maximum desired threshold **1220,** then the PID value is in a desired or preferred range.

The display of warning section **824** and warning section **1202** are controlled by user interface element **1222.** The range of the gap between warning section **824** and warning section **1202** is controlled by the range between minimum warning threshold **1224** and maximum warning threshold **1226.** When the PID value is below minimum desired threshold **1224** or above maximum desired threshold **1226,** then the PID value is in a warning range that could lead to engine fault, damage, or failure.

User interface element **1228** identifies whether the defuel settings are active. When the PID value is below minimum defuel threshold **1224** or above maximum defuel threshold **1226,** then the PID value is in a defuel range where the fuel supply to the engine will reduced in order to protect the engine.

In one embodiment, the relationships shown below are maintained by the thresholds displayed on parameter adjustment view **1206.**

$$\text{minimum defuel threshold } \mathbf{1230} \leq \text{minimum warning threshold } \mathbf{1224} \qquad \text{Rel.1}$$

$$\text{minimum warning threshold } \mathbf{1224} \leq \text{minimum desired threshold } \mathbf{1218} \qquad \text{Rel.2}$$

$$\text{minimum desired threshold } \mathbf{1218} \leq \text{maximum desired threshold } \mathbf{1220} \qquad \text{Rel.3}$$

$$\text{maximum desired threshold } \mathbf{1220} \leq \text{maximum warning threshold } \mathbf{1226} \qquad \text{Rel.4}$$

$$\text{maximum warning threshold } \mathbf{1226} \leq \text{maximum defuel threshold } \mathbf{1232} \qquad \text{Rel.5}$$

Referring to Figure 12D, when minimum desired threshold **1218** is dragged to the left, minimum warning threshold **1224** and minimum defuel threshold **1230** may also move to the left so that both minimum warning threshold **1224** and minimum defuel threshold **1230** remain less than or equal to minimum desired threshold **1218**.

When maximum desired threshold **1220** is dragged to the right, maximum warning threshold **1226** and maximum defuel threshold **1232** may also move to the right so that both maximum warning threshold **1226** and maximum defuel threshold **1232** remain greater than or equal to maximum desired threshold **1220**.

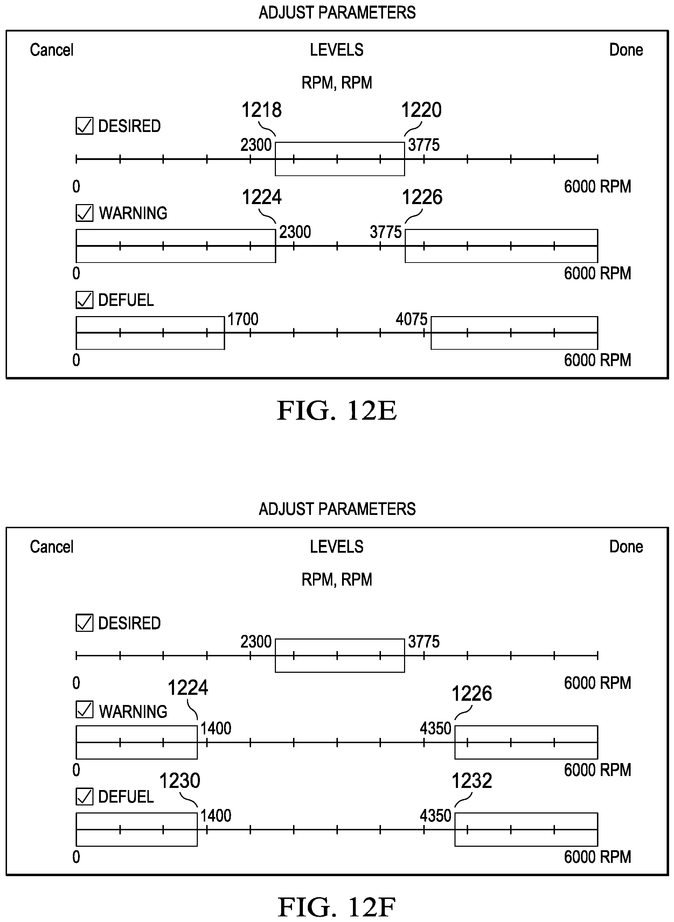

Referring to Figure 12E, when minimum warning threshold **1224** is dragged to the right, minimum desired threshold **1218** may also move to the right so that minimum desired threshold **1218** remains greater than or equal to minimum warning threshold **1224**.

When maximum warning threshold **1226** is dragged to the left, maximum desired threshold **1220** may also move to the left so that maximum desired threshold **1220** remains less than or equal to maximum warning threshold **1226**.

Referring to Figure 12F, when minimum warning threshold **1224** is dragged to the left, minimum defuel threshold **1230** may also move to the left so that minimum defuel threshold **1230** remains less than or equal to minimum warning threshold **1224**.

When maximum warning threshold **1226** is dragged to the right, maximum defuel threshold **1232** may also move to the right so that maximum defuel threshold **1232** remains greater than or equal to maximum warning threshold **1226**.

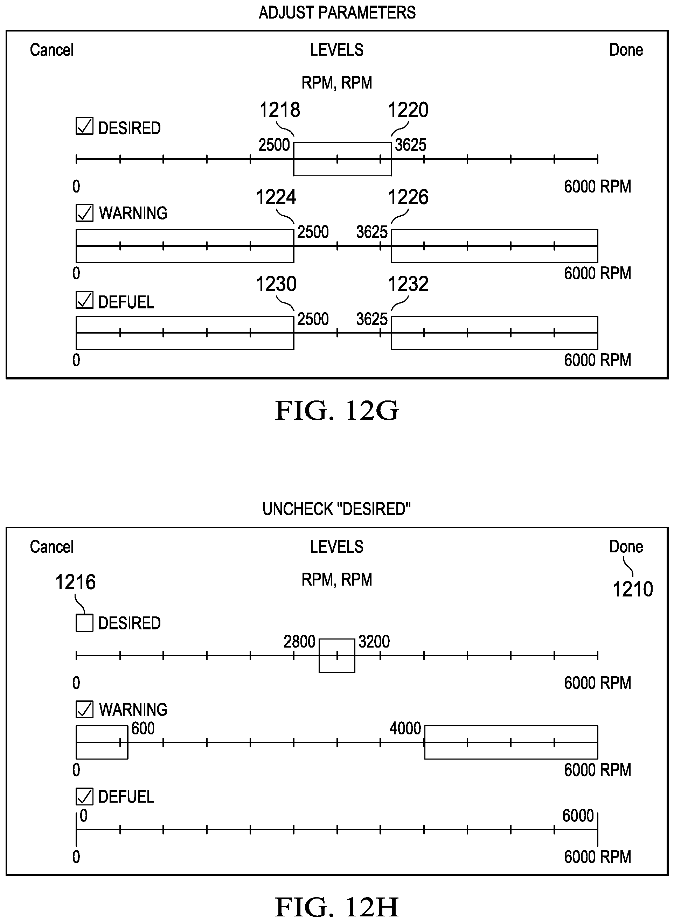

Referring to Figure 12G, when minimum defuel threshold **1230** is dragged to the right, minimum warning threshold **1224** and minimum desired threshold **1218** may also move to the right so that both minimum warning threshold **1224** and minimum desired threshold **1218** remain greater than or equal to minimum defuel threshold **1230**.

When maximum defuel threshold **1232** is dragged to the left, maximum warning threshold **1226** and maximum desired threshold **1220** may also move to the left so that both maximum warning threshold **1226** and maximum desired threshold **1220** remain less than or equal to maximum defuel threshold **1232**.

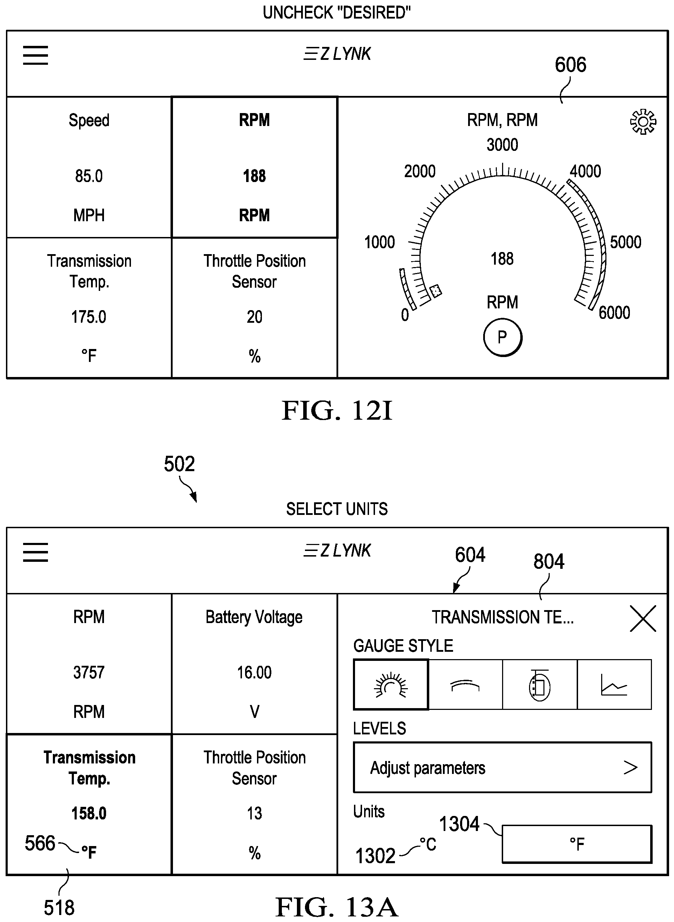

Referring to Figures 12H and 12I, when user interface element (checkbox) **1216** is unselected and user interface element (done button) **1210** is selected, then the desired section is not displayed on the selected gauge view **606**, as shown in Figure 12I.

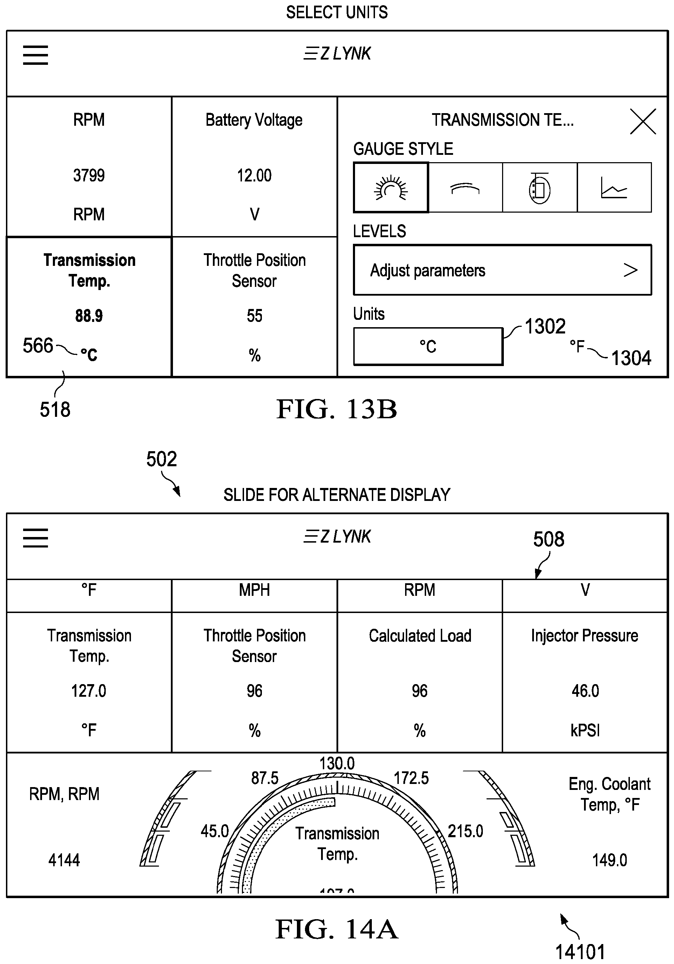

Referring to Figures 13A and 13B, user interface **502** displays multiple gauge view **604**, mini gauge **518** has been selected, and settings view **804** is displayed. Settings view **804** includes user interface element **1302** and user interface element **1304**.

User interface element **1302** and user interface element **1304** allow for the selection between different units for the PID values associated with mini gauge **518**. In one embodiment, mini gauge **518** is associated with transmission temperature and can be displayed in degrees Celsius (°C) upon the selection of user interface element **1302** or in degrees Fahrenheit (°F) upon the selection of user interface element **1304**.

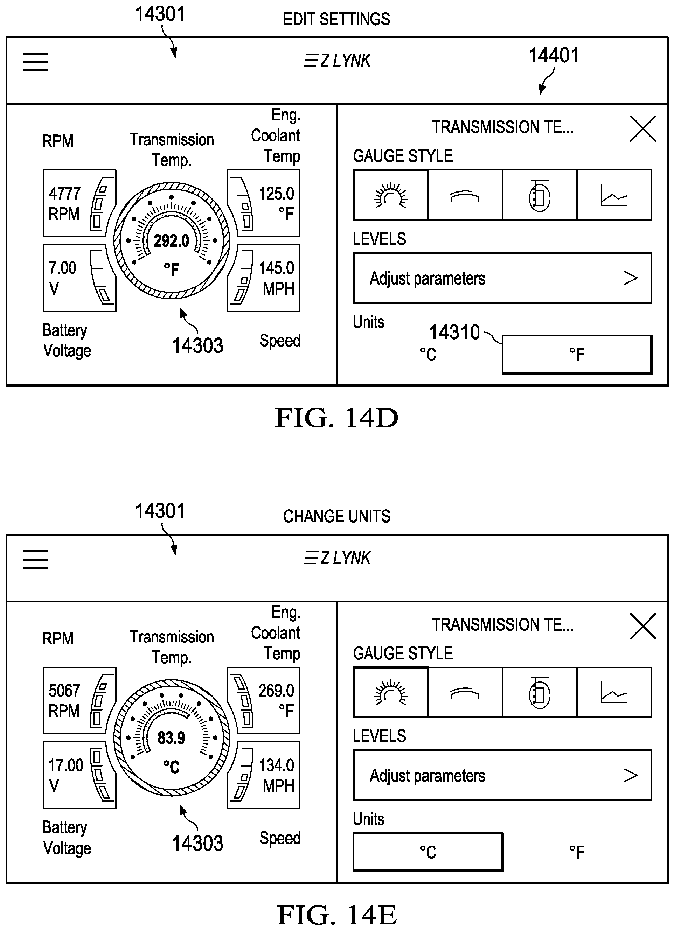

Referring to Figures 14A through 14E, user interface **502** transitions from multiple (eight) gauge view **508** to multiple gauge view **1401**. Multiple gauge view **1401** may also be referred to as five gauge view **1401**. The transition from eight gauge view **508** to five gauge view **1401** occurs when there is a slide or drag event that drags eight gauge view **508** up to reveal five gauge view **1401**. Additionally, the transition from five gauge view **1401** to eight gauge view **508** occurs when there is a slide or drag event that drags five gauge view **1401** down to reveal eight gauge view **508**.

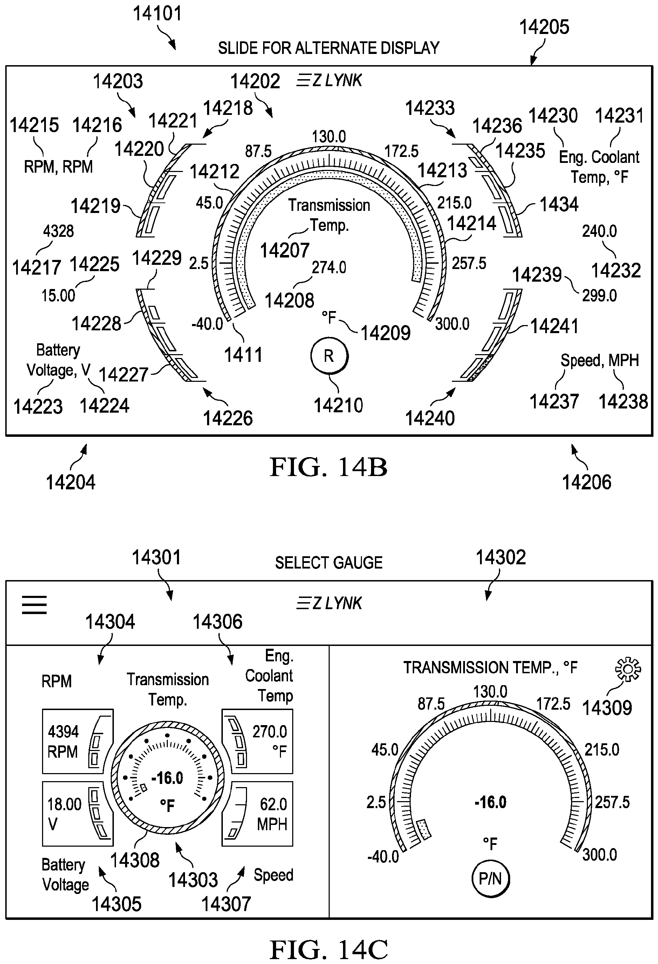

Referring to figure 14B, five gauge view **14101** includes gauge views **14202, 14203, 14204, 14205,** and **14206,** which may be referred to as large center gauge view **14202,** top left gauge view **14203,** bottom left gauge view **14204,** top right gauge view **14205,** and bottom left gauge view **14206**.

Large center gauge view **14204** includes name **14207,** value **14208,** units **14209,** gear **14210,** and circular gauge view **14211**. Circular gauge view **14211** includes lower warning section **14212,** desired section **14213,** and upper warning section **14214**. Large center gauge view **14204** indicates that the vehicle is in reverse and that the transmission temperature is 274.0 °F and is in a warning range that is above the desired range.

Top left gauge view **14203** includes name **14215,** units **14216,** value **14217,** and arc gauge view **14218**. Arc gauge view **14218** includes lower warning section **14219,** desired section **14220,** and upper warning section **14221**. Top left gauge view **14203** indicates that the RPM of the motor is 4328 RPM, which is just above the desired range an in the upper warning range.

Bottom left gauge view **14204** includes name **14223,** units **14224,** value **14225,** and arc gauge view **14226**. Arc gauge view **14226** includes lower warning section **14227,** desired section **14228,** and upper warning section **14229**. Bottom left gauge **14204** indicates that the battery voltage is 15.00 V and is in the upper warning range.

Top right gauge view **14205** includes name **14230,** units **14231,** value **14232,** and arc gauge view **14233**. Arc gauge view **14233** includes lower warning section **14234,** desired section **14235,** and upper section **14236**. Top right gauge **14205** indicates that the engine coolant temperature is 240.0 °F and is in the upper warning section above the desired level.

Bottom right gauge view **14206** includes name **14237,** units **14238,** value **14239,** and arc gauge view **14240**. Arc gauge view **14240** includes warning section **14241** that indicates which values are too high. Bottom right gauge **14206** indicates that the speed of the vehicle is 299.0 MPH and is in the upper warning range.

The names, units, and values displayed on the gauges in large five gauge view **14101** are each shaded in red to indicate that each of the values of each of the gauges is in a warning section

When any one of gauge views **14202, 14203, 14204, 14205,** and **14206** are selected from large five gauge view **14101,** user interface **502** transitions from displaying large five gauge view **14101** to multiple gauge view **14301** and selected gauge view **14302,** shown in Figure 14C. Multiple gauge view **14301** may also be referred to as small five gauge view **14301.**

Referring to Figure 14C, small five gauge view **14301** includes gauge views **14303, 14304, 14305, 14306,** and **14307,** which may be referred to as small center gauge view **14303,** top left gauge view **14304,** bottom left gauge view **14305,** top right gauge view **14306** and bottom right gauge view **14307.** Gauge views **14303, 14304, 14305, 14306,** and **14307** from small five gauge view **14301** are associated with the same PIDs as gauge views **14202, 14203, 14204, 14205,** and **14206** from large five gauge view **14101** of Figure 14B respectively. The values for gauge views **14303, 14304, 14305, 14306,** and **14307** are continuously updated to reflect the current state of the engine.

Selected gauge view **14302** of Figure 14C is similar to selected gauge view **606** of Figure 6 and is associated with small center gauge **14303.** Small center gauge view **14303** includes outline **14308** to indicate that small center gauge view **14303** is the gauge view that is linked to or associated with selected gauge view **14302** and that large center gauge view **14202** may have been selected from multiple gauge view **14101** of Figure 14B.

When user interface element **14309** of Figure 14C is selected, user interface 502 transitions from displaying selected gauge view **14302** of Figure 14C to displaying settings view **14401** of Figure 14D. Settings view **14401** of Figure 14D is similar to settings view **804** of Figure 8.

Referring to Figure 14D, degrees Fahrenheit (°F) were originally selected and displayed on small center gauge view **14303.** Upon selection of user interface element **14310,** degrees Celsius (°C) are selected and displayed on small center gauge view **14303.**

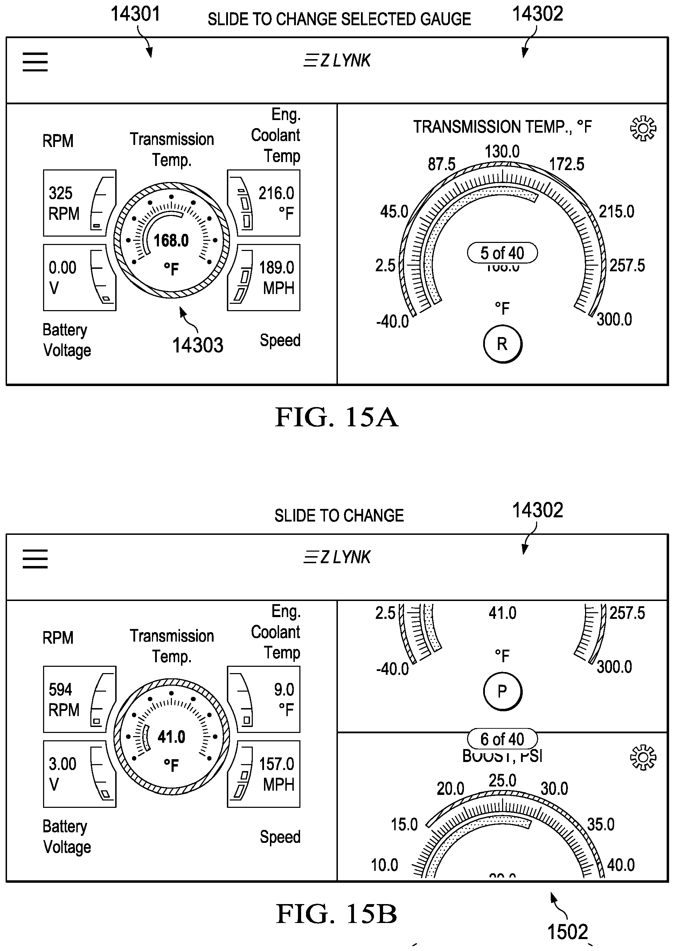

Referring to Figures 15A to 15D, when selected gauge view **14302** is slid or dragged up, second selected gauge view **1502** is revealed. Additionally, small center gauge view **14303** that is associated with transmission temperature is updated to second small center gauge view **1504.** Second small center gauge view **1504** is a Boost value that is 29.0 pounds per square inch (PSI).

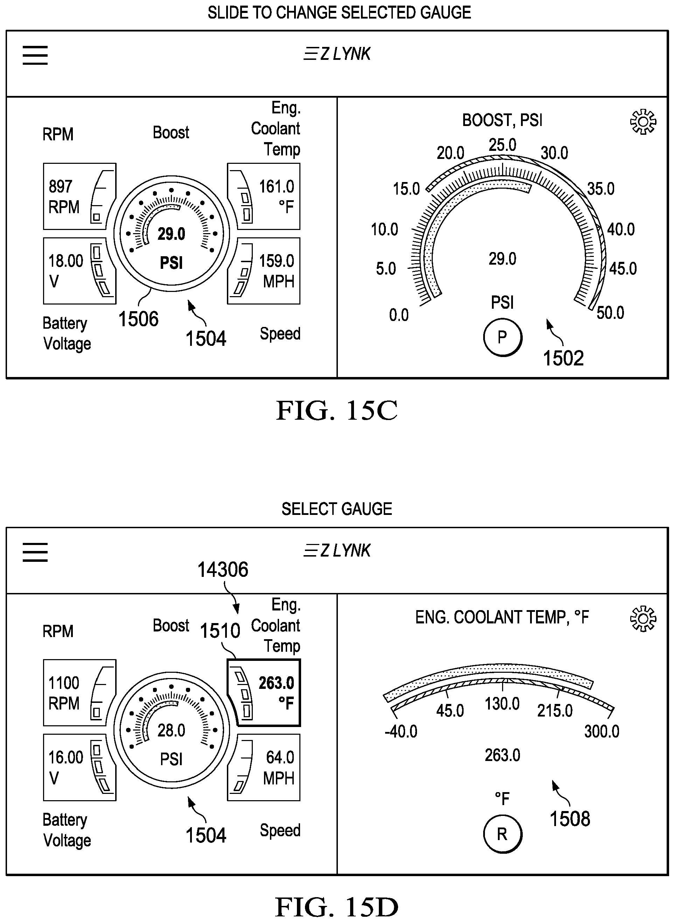

Upon selection of small top right gauge view **14306** in Figure 15D, selected gauge view **1502** of Figure 15C is updated to selected gauge view **1504** of Figure 15D. Selected gauge view **1504** shows the same PID information as small top right gauge view **14306.** Small top right gauge view **14306** is updated to include outline **1510** and outline **1506** around small center gauge view **1504** is removed.

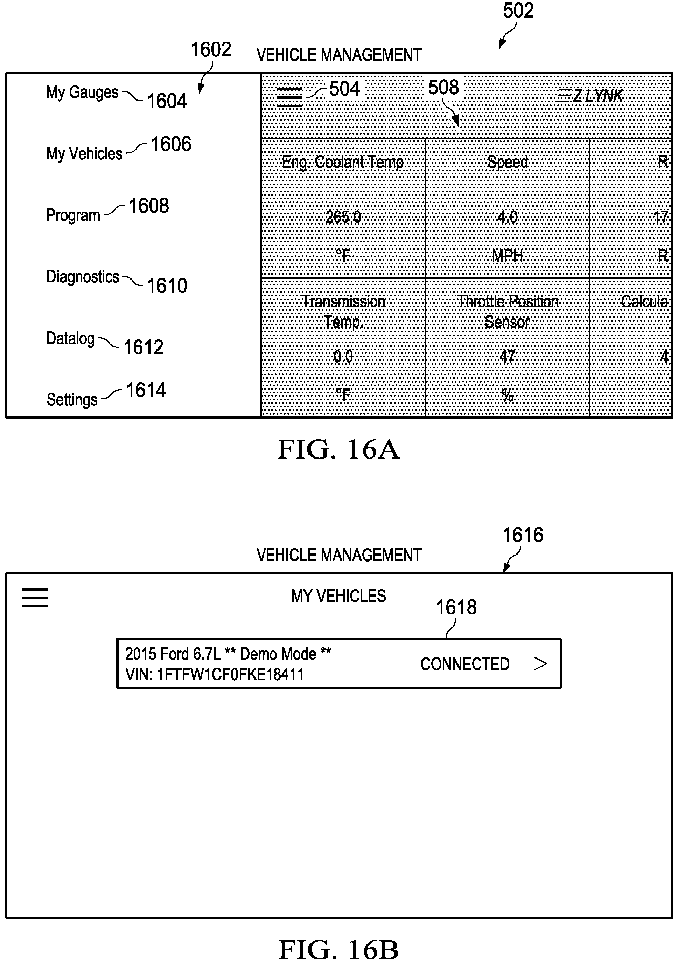

Referring to Figure 16A, menu button **504** is selected. Eight gauge view **508** slides partially to the right and down and is made more transparent to enhance the display of menu **1602.** Menu **1602** includes user interface elements **1604, 1606, 1608, 1010, 1012,** and **1614,** which may also be referred to as "My Gauges" button **1604,** "My Vehicles" button **1606,** "Program" button **1608,** "Diagnostics" button **1610,** "Datalog" button **1612,** and "Settings" button **1614.**

Selecting button **1604** removes menu **1602** and brings back the most recent gauge view, which in Figure 16A is eight gauge view **508.**

Selecting button **1606** removes menu **1602** and transitions user interface **502** to view **1616** of Figure 16B. View **1616** may also be referred to as "My Vehicles" view **1616,** includes a user interface element for each vehicle that has been associated with the client device app. User interface element **1618** includes the year, make, and model of the vehicle and indicates that the local device is attached to the vehicle associated with user interface

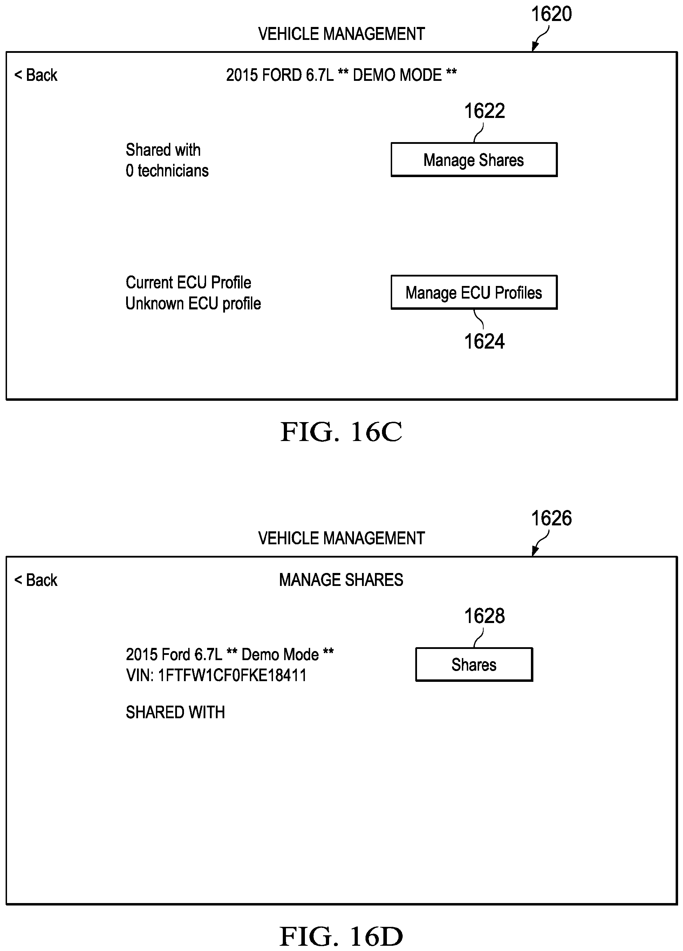

Upon selecting user interface element **1618,** user interface **502** transitions to view **1620** of Figure 16C. View **1620** may also be referred to as vehicle view **1620,** includes user interface elements **1622** and **1624,** identifies the number of technicians to which the vehicle has been shared and identifies the current ECU profile.

Upon selecting user interface element **1622,** user interface **502** transitions to view **1626** of Figure 16D. View **1626** may also be referred to as Manage Shares view **1626,** includes user interface element **1628,** and lists the technicians to which the vehicle has been shared in one or more user interface elements. As shown, in Figure 16D, the vehicle has not been shared with any technicians.

Selecting user interface element **1624** brings up a different view (not shown) that allows for the management of ECU profiles. The management of ECU profiles includes: updating one or more parameters within a profile and deleting a profile from the client device.

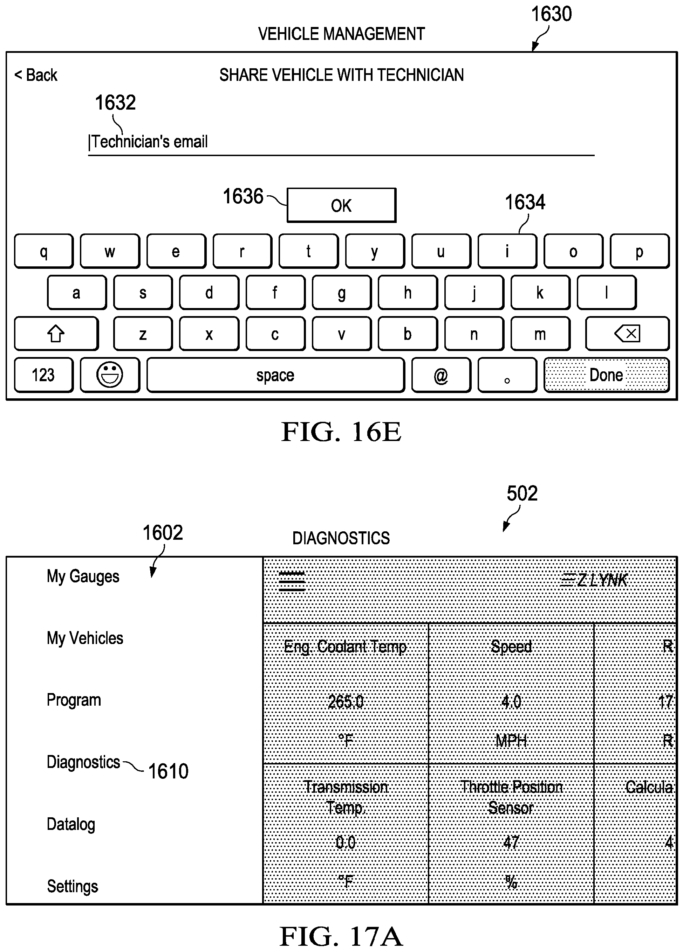

Upon selecting user interface element **1628,** user interface **502** transitions to view **1630** of Figure 16E. View **1630** may also be referred to as Manage Shares view **1630,** includes user interface element **1632,** keyboard **1634,** and user interface element **1636.** User interface element **1632** is an edit box that receives a technician's email address that acts as the login information to access a system server, such as system server **102** of Figure 1.

In one embodiment, view **1630** of user interface **502** is displayed on a client device that is used by a technician that is diagnosing the car to allow the technician to log into the server. Upon selection of the "Done" button on keyboard **1634** or user interface element **1636,** the client device app will attempt to login to the system server and associated (or share) the vehicle with the technician's client device.

In an alternative embodiment, view **1630** of user interface **502** is displayed on a client device that is used by the owner of the vehicle that is being diagnosed. Upon selection of the "Done" button on keyboard **1634** or user interface element **1636,** the client device app will send the technician's email address to the server, which will then allow the technician to log in and will then allow the vehicle information from the ODB2 port of the vehicle to be shared with a second client device that is operated by a technician. Sharing the vehicle information with the technician's client device allow the technician to diagnose the vehicle, even when the vehicle and the technician are remotely located.

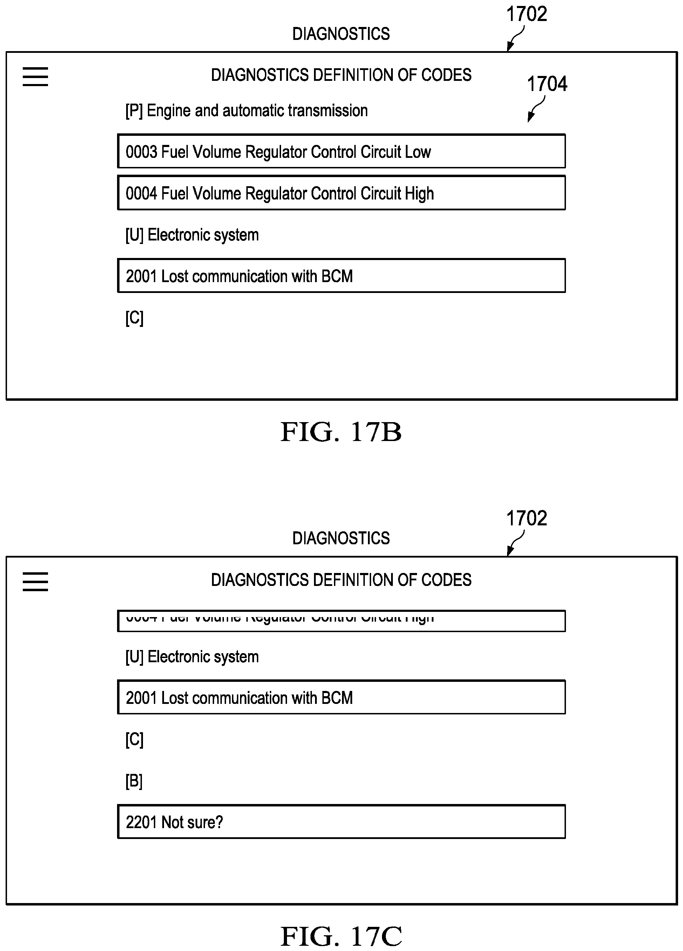

Referring to Figures 17A, 17B, 17C, upon selection of user interface element **1610** from menu **1602,** user interface **502** displays view **1702.** View **1702** may be referred to as diagnostics view **1702** and displays list **1704** of diagnostic codes with a text description of the code. List **1704** is a list that can be scrolled up and down to show more than one page of information. Figure 17B shows the top of list **1704** and Figure 17C shows the bottom of list **1704.**

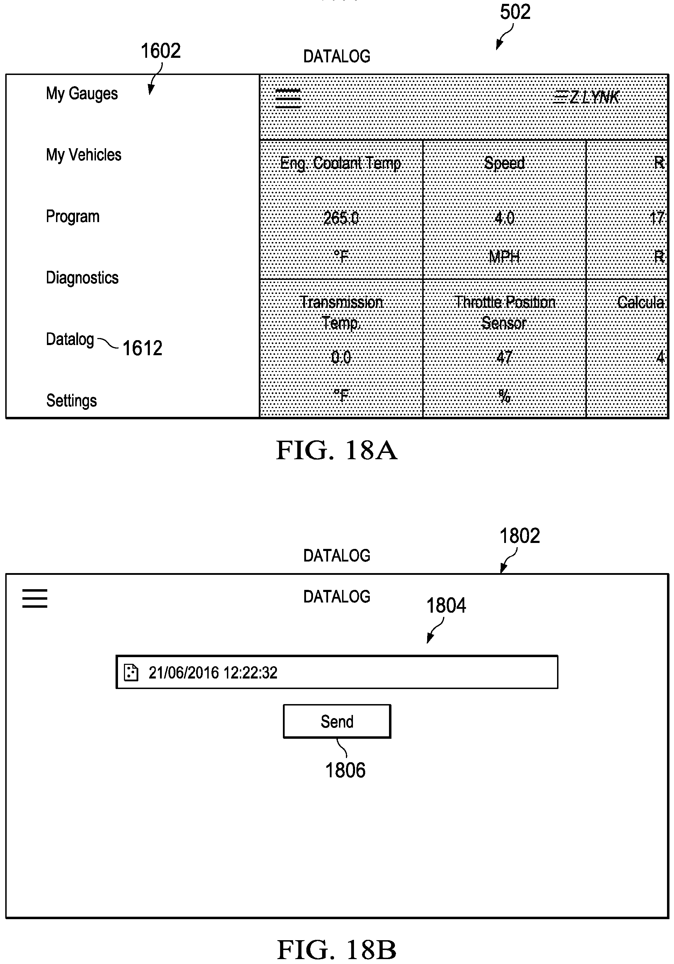

Referring to figures 18A and 18B, upon selection of user interface element **1612** from menu **1602,** user interface **502** displays view **1802.** View **1802,** which may be referred to as "Datalog" view **1802,** displays list **1804** of data logs, below which is user interface element **1806.** List **1804** is a scrollable list that shows the data logs that can be sent to the system server. The data logs store information received by the client device from the local device that the local device received from the automotive controller. Selecting user interface element **1806** sends a data log that has been selected from list **1804** to the system server.

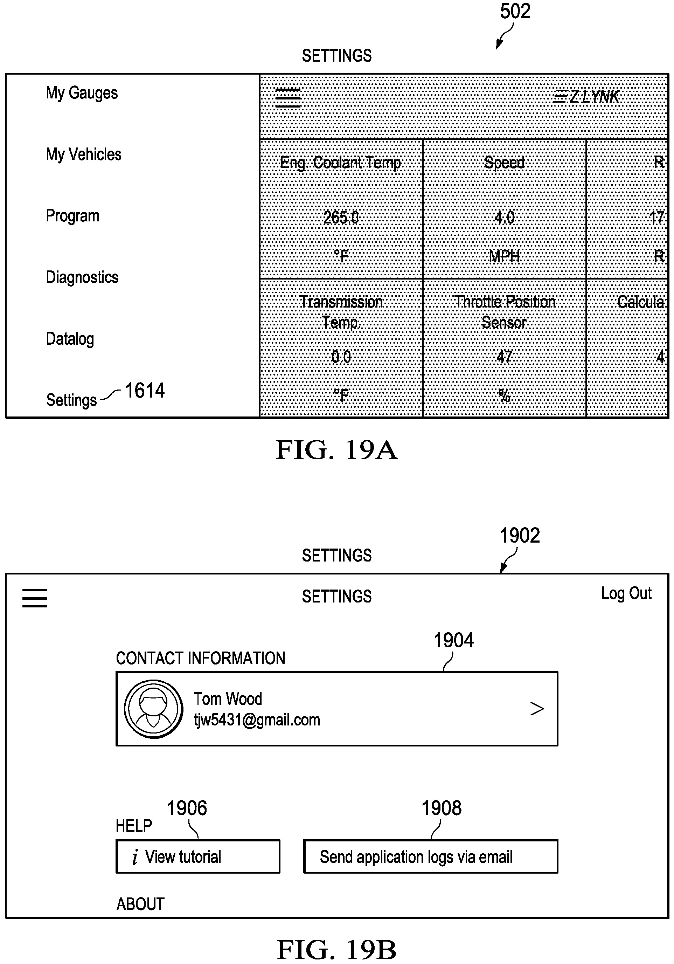

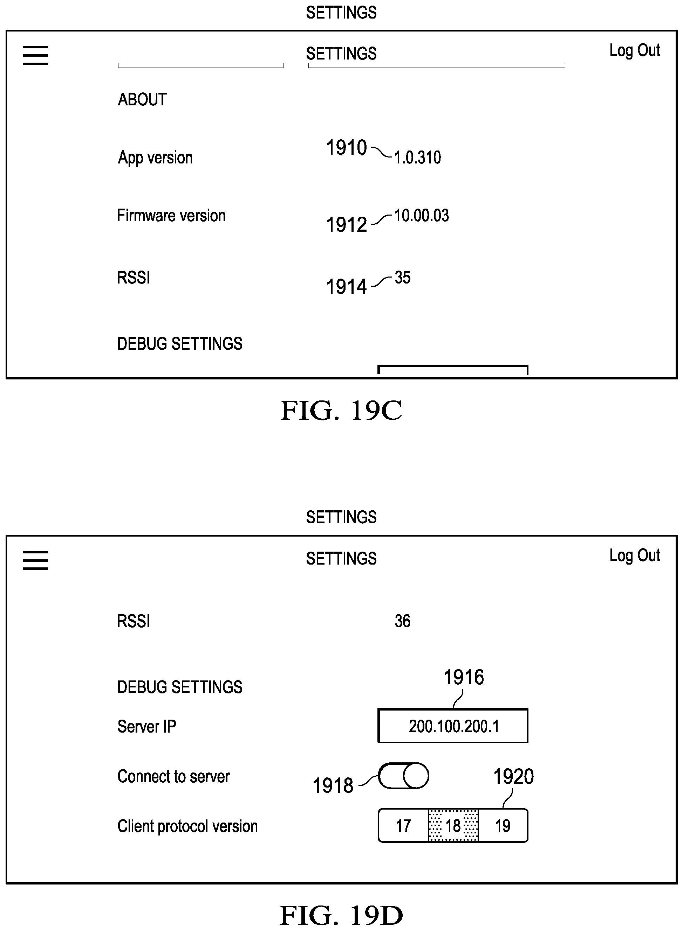

Referring to Figures 19A, 19B, 19C, and 19D, upon selection of user interface element **1614,** user interface **502** displays view **1902.** View **1902,** which may also be referred to as "Settings" view **1902,** displays one or more user interface elements that allow the user of the app to view and control various settings related to the app.

User interface element **1904** displays contact information including a name and an email address. When user interface element **1904** is selected, user interface **502** displays another view (not shown) that allows the user to view and manipulate the contact information, which also includes a phone number and a birthday. The contact information is used by the technician to contact the owner of the vehicle that the local device is connected to.

When selected, user interface element **1906** displays one or more videos that show how to use the client device app.

User interface element **1908** is for the development of the client device application itself. When user interface element **1908** selected, the client device app will send the log of information recorded by the client device app via an email to the contact identified in user interface element **1904.**

User interface element **1910** displays the version of the client device app that is currently running.

User interface element **1912** displays the version of the firmware running on the local device that is currently running.

User interface element **1914** displays a receive signal strength indicator (RSSI) that indicates the strength of the wireless signal that is sent by the local device and received by the client device.

User interface element **1916** is an edit box that contains the internet protocol (IP) address that the client device will use to connect to the server running on the local device.

User interface element **1918** is a binary selector switch that, when enabled, allows the app to connect to the server running on the local device.

User interface element **1920** is a multiple position single selector switch that is used to select which protocol version that the client device app will use to communicate with the server running on the local device.

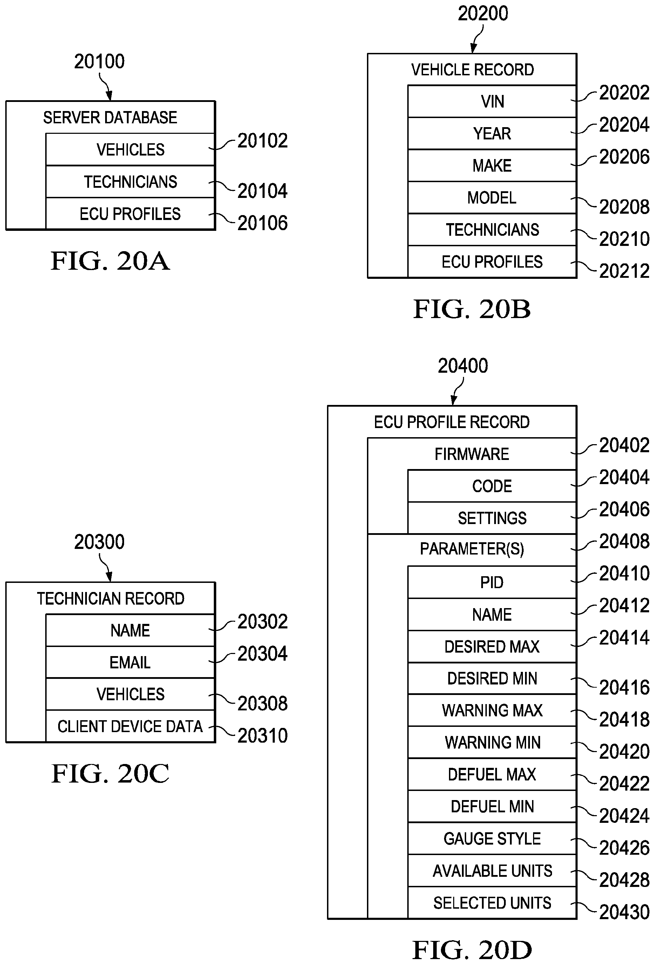

Referring to figure 20A, server database **20100** is an embodiment of database 106 that is accessed by system server **102** of Figure 1. Server database **20100** comprises one or more records, which may themselves be databases. The records can be stored on any device of the system. In one embodiment, server database **20100** includes records for vehicles **20102,** technicians **20104,** and engine control unit (ECU) profiles **20106.**

Vehicles **20102** comprise vehicle records **20200** of Figure 20B that are each associated with a vehicle. Technicians **20104** comprise technician records **20300** that are each associated with a technician. ECU profiles **20106** comprise ECU profile records **20400** that are each associated with an ECU profile.

Referring to Figure 20B, vehicle record **20200** comprises data and information related to a vehicle. Vehicle identification number (VIN) **20202** is a unique that is assigned to the vehicle by the manufacturer of the vehicle in accordance with international standard ISO 3833. Year **20204** is the model year of the vehicle, which in one embodiment is stored as an unsigned integer. Make **20206** identifies the manufacturer of the vehicle, which in one embodiment is stored as a string of characters in accordance with either the American Standard Code for Information Interchange (ASCII) or Unicode. Model **20208** identifies the model of the vehicle, which in one embodiment is stored as a string of characters. Technicians **20210** are links to technician records **20300** for each technician that has been associated with the vehicle. ECU profiles **20212** are links to ECU profile records **20400** for each ECU profile that has been associated with the vehicle.

Referring to Figure 20C, technician record **20300** comprises data and information associated with a technician. Name **20302** is the name of the technician, which in one embodiment is stored as a string of characters. Email **20304** is an email address of the technician that may also serve as a login identifier for the technician and which, in one embodiment, is stored as a string of characters. Vehicles **20308** are links to vehicle records **20200** that are associated with the technician. Client device data **20310** includes data and information about the device that the technician uses to access the system, including: a unique device identifier, operating system (OS) version, client application version, and so on.

Referring to Figure 20D, ECU profile record **20400** comprises data and information associated with an ECU profile. ECU profile record **20400** includes firmware **20402** and parameters **20408.**

Firmware **20402** is the firmware that runs on an automotive controller, such as automotive controller **114** of Figure 1. Firmware **20402** includes code **20404** and settings **20406.** Code **20404** are the computer code instructions that allow the automotive controller to operate. Settings **20406** are the settings used to tune the engine for efficiency or performance, including settings for ignition timing advance, spark timing, fuel injection, electronic throttle control, poppet valve timing, boost control, an anti-lock braking system, an automatic transmission, a speed governor, an electronic stability control system, and so forth.

Parameters **20408** are the parameters for the gauges displayed on a client device, such as client device **110** of Figure 1. Parameter identifier (PID) **20410** is a numeric identifier that uniquely identifies the type of data from the automotive controller associated with the parameter. Name **20412** identifies the name of the parameter, which can include: engine coolant temperature, speed, revolutions per minute, battery voltage, transmission temperature, boost, calculated load, injector pressure, injector pulse width, throttle position sensor, and so on. Desired max **20414** is a numerical value that indicates a maximum desired value for the parameter. Desired min **20416** is a numerical value that indicates a minimum desired value for the parameter.

Warning max **20418** is a numerical value that indicates the beginning of an upper warning range. Warning min **20420** is a numerical value that indicates the end of a lower warning range. Continued operation of the vehicle with the values associated with the parameter above warning max **20418** or below warning min **20420** could lead to a breakdown of the engine.

Defuel max **20422** is a numerical value that indicates the threshold above which the vehicle will be defueled to prevent a breakdown. Defuel min **20424** is a numerical value that indicates the threshold below which the vehicle will be defueled to prevent a breakdown.

Gauge style **20426** identifies the style of the gauge that will be used to display the parameter values on the client device.

Available units **20428** is a list of units that can be used to display the values related to parameter **20408.** Selected units **20430** identifies which units of available units **20428** will be used to display the values of parameter **20408.**

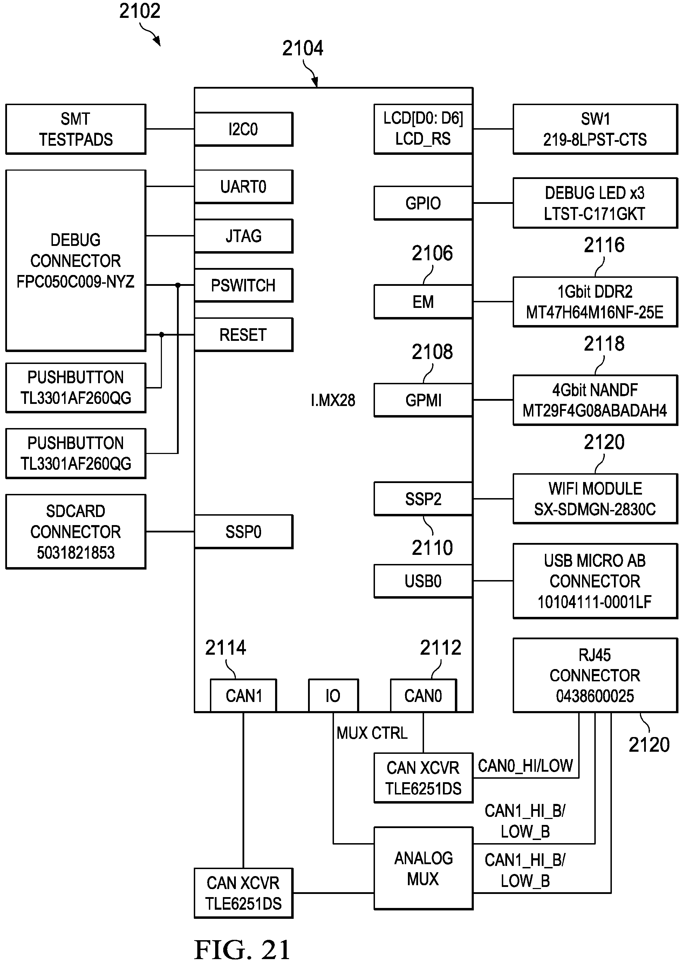

Referring to Figure 21, system **2102** is a system within local device **112** of Figure 1. System **2102** includes application processor **2104** that controls local device **112.** System **2102** includes: external memory interface (EMI) **2106,** general-purpose media interface (GPMI) **2108,** synchronous serial port (SSP) **2110** and controller area network (CAN) interfaces 2112 and 2114.

EIM **2106** is connected to memory **2116** and **GPMI 2108** is connected to memory **2118.** In one embodiment, memory **2118** is lower speed persistent memory that stores the programs and data run by application processor **2104** using memory **2116.**

SSP **2110** is connected to Wi-Fi module **2112** to allow for wireless communication. In one embodiment, program instructions stored one or more of memory **2116** and memory **2118** are executed by application processor **2104** so that local device 112 may function as an access point to which a client device can connect.

CAN interface **2112** is connected to a first CAN bus of a vehicle via connector **2120** and CAN interface **2114** is connected to a second CAN bus of the vehicle via connector **2120.** In one embodiment, connector **2120** is an RJ45 connector and an adapter (not shown) connects between connector **2120** and the on-board diagnostics (OBD) port on the vehicle.

Although embodiments of the present disclosure have been described in detail, those skilled in the art should understand that they may make various changes, substitutions and alterations herein without departing from the scope of the present disclosure. Accordingly, all such changes, substitutions and alterations are intended to be included within the scope of the present disclosure as defined in the following claims. In the claims, means-plus-function clauses are intended to cover the structures described herein as performing the recited function and not only structural equivalents, but also equivalent structures.

**Claims**

1.  A method for use with a local device (112) that is directly connected by a hardwired connection to an automotive controller (114) which is connected through a controller area network to sensors (120) and actuators (122) resident on a vehicle, wherein the method comprises:

    establishing a data connection with the automotive controller (114);

establishing a wireless network connection with a client device (110) which acts as a client of a system server (102) and as a client of the local device (112);

sending a first vehicle data request from the client device (110) to the local device (112);

retrieving, by the local device (112), the first vehicle data from the automotive controller (114) based on the first vehicle data request;

transmitting, by the local device (112), the first vehicle data to the client device (110) for display by the client device (110);

sending a second vehicle data request from the client device (110) to the local device (112);

retrieving, by the local device (112), the second vehicle data from the automotive controller (114) based on the second vehicle data request;

transmitting, by the local device (112), the second vehicle data to the client device (110) for display by the client device (110);

transmitting, by the client device (110), a request for updated engine parameters to the system server (102) based on the second vehicle data;

receiving, at the client device (110), the updated engine parameters and updated firmware;

making, at the client device (110), a selection of one or more of the updated parameters and the updated firmware;

receiving, at the local device, the selection of the one or more of the updated parameters and the updated firmware from the client device (110); and

loading the selection of the one or more of the updated parameters and the updated firmware onto the automotive controller (114).

2. The method of claim 1, further comprising:

receiving a parameter identifier request from the client device (110);
recording the parameter identifier request; and
receiving parameter identifier data from the automotive controller (114) that relates to the parameter identifier request.

3. The method of claim 2:
wherein the parameter identifier request relates to one of engine coolant temperature, speed, revolutions per minute, battery voltage, transmission temperature, boost, calculated load, injector pressure, injector pulse width, and throttle position sensor.

4. The method of claim 3, further comprising:
sending the parameter identifier data to the client device (110) after recording the parameter identifier request.

5. The method of claim 4, further comprising:
receiving an engine check request from the client device (110).

6. The method of claim 5, further comprising:

retrieving an engine code from the automotive controller (114); and
retrieving frozen data associated with the engine code from the automotive controller (114).

7. The method of claim 6, further comprising:
sending a check engine response to the client device (110) that includes the engine code and the frozen data.

8. A method for use with a system server, the method comprising:

receiving engine data from a client device which acts as a client of the system server (102) and as a client of a local device (112), wherein the engine data was generated by an automotive controller (114) which is connected through a controller area network to sensors (120) and actuators (122) resident on a vehicle, and wherein the engine data was communicated from the automotive controller (114) to the local device (112) by a direct hardwired connection between the automotive controller (114) and the local device (112) and communicated from the local device (112) to the client device (110) by a wireless network connection, the step of receiving engine data comprising:

sending a first vehicle data request from the client device (110) to the local device (112);

retrieving, by the local device (112), the first vehicle data from the automotive controller (114) based on the first vehicle data request;

transmitting, by the local device (112), the first vehicle data to the client device (110) for display by the client device (110);

sending a second vehicle data request from the client device (110) to the local device (112);

retrieving, by the local device (112), the second vehicle data from the automotive controller (114) based on the second vehicle data request;

transmitting, by the local device (112), the second vehicle data to the client device (110) for display by the client device (110); and

receiving at the system server (102) a request from the client device (110) for updated engine parameters based on the second vehicle data;

sending the updated engine parameters and updated firmware from the system server (102) to the client device (110);

making, at the client device (110), a selection of one or more of the updated parameters and the updated firmware;

receiving, at the local device (112), the selection of the one or more of the updated parameters and the updated firmware from the client device (110);

loading the selection of the one or more of the updated parameters and the updated firmware onto the automotive controller (114); and

receiving engine data at the system server (102) from the client device (110) after the updated firmware is loaded to the automotive controller (114).

9. The method of claim 8, further comprising:

sending a request to a calibration writer server (118) for updated firmware; and preferably
receiving the updated firmware from the calibration writer server (118).

10. The method of claim 9, further comprising:

receiving an updated engine setting from the client device (110); and preferably
receiving engine data from a first client device (110) after the updated engine setting is loaded to the automotive controller (114).

11. A method for use with a client device (110) which acts as a client of a system server (102) and as a client of a local device (112), the method comprising:

establishing a wireless network connection with the local device (112) which is connected to an automotive controller (114), the automotive controller (114) being connected through a controller area network to sensors (120) and actuators (122) resident on a vehicle;

sending a gauge data request from the client device (110) to the local device (112);

retrieving, by the local device (112), the gauge data from the automotive controller (114) based on the gauge data request;

transmitting, by the local device (112), the gauge data to the client device (110);

displaying gauge data received from the local device (112) on a gauge view of a multiple gauge view in a user interface on the client device (110);

sending a further vehicle data request from the client device (110) to the local device (112);

retrieving, by the local device (112), the further vehicle data from the automotive controller (114) based on the further vehicle data request;

transmitting, by the local device (112), the further vehicle data to the client device (110) for display by the client device (110);

transmitting, by the client device (110), a request for updated engine parameters to the system server (102) based on the further vehicle data;

receiving a response from the system server (102) that includes the updated engine parameters and updated firmware;

making, at the client device (110), a selection of one or more of the updated parameters and the updated firmware;

sending, by the client device (110), the selection of the one or more of the updated parameters and the updated firmware to the local device (112);

receiving, at the local device (112), the one or more of the updated parameters and the updated firmware from the client device (110);

loading the one or more of the updated parameters and the updated firmware onto the automotive controller (114); and

receiving parameter identifier data from the local device (110) after the updated firmware is loaded onto the automotive controller (114) by the local device (110).

12. The method of claim 11, further comprising:

sending a parameter identifier request to the local device (112) for parameter identifier data; and preferably receiving the parameter identifier data from the local device (112) after the parameter identifier request is recorded by the local device (112).

13. The method of claim 12, further comprising:

sending an engine check request to the local device (112); and preferably receiving an engine check response from the local device (112), wherein the engine check response preferably comprises an engine code and frozen data associated with the engine code.

14. The method of claim 13, further comprising:
displaying the engine code.

15. The method of claim 14, further comprising:

sending the engine code and the frozen data to a system server (102);
sending a request for updated firmware to the system server (102) based on the engine code;
storing the updated firmware on the client device (110);
receiving a selection of an updated engine setting by the client device (110) from a user of the client device (110); and
including the updated engine setting in the updated firmware.

**Patentansprüche**

1. Verfahren zur Verwendung mit einem lokalen Gerät (112), das durch eine festverdrahtete Verbindung direkt mit einer Automobilsteuerung (114) verbunden ist, die durch ein Steuerungslokalnetz mit in einem Fahrzeug befindlichen Sensoren (120) und Aktoren (122) verbunden ist, wobei das Verfahren umfasst:

Aufbauen einer Datenverbindung mit der Automobilsteuerung (114);
Aufbauen einer drahtlosen Netzwerkverbindung mit einem Client-Gerät (110), das als Client eines Systemservers (102) und als Client des lokalen Geräts (112) fungiert;
Senden einer ersten Fahrzeugdatenanforderung von dem Client-Gerät (110) an das lokale Gerät (112);
Abrufen, durch das lokale Gerät (112), der ersten Fahrzeugdaten von der Automobilsteuerung (114) auf Basis der ersten Fahrzeugdatenanforderung;
Übertragen, durch das lokale Gerät (112), der ersten Fahrzeugdaten an das Client-Gerät (110) zur Anzeige durch das Client-Gerät (110);
Senden einer zweiten Fahrzeugdatenanforderung von dem Client-Gerät (110) an das lokale Gerät (112);
Abrufen, durch das lokale Gerät (112), der zweiten Fahrzeugdaten von der Automobilsteuerung (114) auf Basis der zweiten Fahrzeugdatenanforderung;
Übertragen, durch das lokale Gerät (112), der zweiten Fahrzeugdaten an das Client-Gerät (110) zur Anzeige durch das Client-Gerät (110);
Übertragen, durch das Client-Gerät (110), einer Anforderung von aktualisierten Motorparametern an den Systemserver (102) auf Basis der zweiten Fahrzeugdaten;
Empfangen, an dem Client-Gerät (110), der aktualisierten Motorparameter und aktualisierten Firmware;
Treffen, an dem Client-Gerät (110), einer Auswahl eines oder mehrerer der aktualisierten Parameter und der aktualisierten Firmware;
Empfangen, an dem lokalen Gerät, der Auswahl des einen oder mehrerer der aktualisierten Parameter und der aktualisierten Firmware von dem Client-Gerät (110); und
Laden der Auswahl des einen oder mehrerer der aktualisierten Parameter und der aktualisierten Firmware auf die Automobilsteuerung (114).

2. Verfahren nach Anspruch 1, ferner umfassend:

Empfangen einer Parameterkennungsanforderung von dem Client-Gerät (110);
Aufzeichnen der Parameterkennungsanforderung; und
Empfangen von Parameterkennungsdaten von der Automobilsteuerung (114), die sich auf die Parameterkennungsanforderung beziehen.

3. Verfahren nach Anspruch 2:
wobei sich die Parameterkennungsanforderung auf eines von Motorkühlmitteltemperatur, Geschwindigkeit, Umdrehungen pro Minute, Batteriespannung, Getriebetemperatur, Laden, berechneter Last, Injektordruck, Injektorpulsbreite und Drosselpositionssensor bezieht.

4. Verfahren nach Anspruch 3, ferner umfassend:
Senden der Parameterkennungsdaten an das Client-Gerät (110) nach dem Aufzeichnen der Parameterkennungsanforderung.

5. Verfahren nach Anspruch 4, ferner umfassend:
Empfangen einer Motorprüfanforderung von dem Client-Gerät (110).

6. Verfahren nach Anspruch 5, ferner umfassend:

Abrufen eines Motorcodes von der Automobilsteuerung (114); und
Abrufen eingefrorener Daten im Zusammenhang mit dem Motorcode von der Automobilsteuerung (114).

7. Verfahren nach Anspruch 6, ferner umfassend:
Senden einer Motorprüfantwort an das Client-Gerät (110), die den Motorcode und die eingefrorenen Daten beinhaltet.

8. Verfahren zur Verwendung mit einem Systemserver, wobei das Verfahren umfasst:

Empfangen von Motordaten von einem Client-Gerät, das als Client des Systemservers (102) und als Client eines lokalen Geräts (112) fungiert, wobei die Motordaten von einer Automobilsteuerung (114) erzeugt wurden, die durch ein Steuerungslokalnetz mit in einem Fahrzeug befindlichen Sensoren (120) und Aktoren (122) verbunden ist, und wobei die Motordaten von der Automobilsteuerung (114) an das lokale Gerät (112) durch eine direkte festverdrahtete Verbindung zwischen der Automobilsteuerung (114) und dem lokalen Gerät (112) übermittelt wurden und von dem lokalen Gerät (112) an das Client-Gerät (110) durch eine drahtlose Netzwerkverbindung übermittelt wurden, wobei der Schritt des Empfangens von Motordaten umfasst:

Senden einer ersten Fahrzeugdatenanforderung von dem Client-Gerät (110) an das lokale Gerät (112);
Abrufen, durch das lokale Gerät (112), der ersten Fahrzeugdaten von der Automobilsteuerung (114) auf Basis der ersten Fahrzeugdatenanforderung;
Übertragen, durch das lokale Gerät (112), der ersten Fahrzeugdaten an das Client-Gerät (110) zur Anzeige durch das Client-Gerät (110);
Senden einer zweiten Fahrzeugdatenanforderung von dem Client-Gerät (110) an das lokale Gerät (112);
Abrufen, durch das lokale Gerät (112), der zweiten Fahrzeugdaten von der Automobilsteuerung (114) auf Basis der zweiten Fahrzeugdatenanforderung;
Übertragen, durch das lokale Gerät (112), der zweiten Fahrzeugdaten an das Client-Gerät (110) zur Anzeige durch das Client-Gerät (110); und
Empfangen, an dem Systemserver (102), einer Anforderung von dem Client-Gerät (110) von aktualisierten Motorparametern auf Basis der zweiten Fahrzeugdaten;

Senden der aktualisierten Motorparameter und aktualisierten Firmware von dem Systemserver (102) an das Client-Gerät (110);
Treffen, an dem Client-Gerät (110), einer Auswahl eines oder mehrerer der aktualisierten Parameter und der aktualisierten Firmware;
Empfangen, an dem lokalen Gerät (112), der Auswahl des einen oder mehrerer der aktualisierten Parameter und der aktualisierten Firmware von dem Client-Gerät (110);

Laden der Auswahl des einen oder mehrerer der aktualisierten Parameter und der aktualisierten Firmware auf die Automobilsteuerung (114); und

Empfangen von Motordaten an dem Systemserver (102) von dem Client-Gerät (110) nach erfolgtem Laden der aktualisierten Firmware in die Automobilsteuerung (114).

**9.** Verfahren nach Anspruch 8, ferner umfassend:

Senden einer Anforderung, an einen Kalibrierungsschreiberserver (118), von aktualisierter Firmware; und bevorzugt

Empfangen der aktualisierten Firmware von dem Kalibrierungsschreiberserver (118).

**10.** Verfahren nach Anspruch 9, ferner umfassend:

Empfangen einer aktualisierten Motoreinstellung von dem Client-Gerät (110); und bevorzugt

Empfangen von Motordaten von einem ersten Client-Gerät (110) nach erfolgtem Laden der aktualisierten Motoreinstellung in die Automobilsteuerung (114).

**11.** Verfahren zur Verwendung mit einem Client-Gerät (110), das als Client eines Systemservers (102) und als Client eines lokalen Geräts (112) fungiert, wobei das Verfahren umfasst:

Aufbauen einer drahtlosen Netzwerkverbindung mit dem lokalen Gerät (112), das mit einer Automobilsteuerung (114) verbunden ist, wobei die Automobilsteuerung (114) durch ein Steuerungslokalnetz mit in einem Fahrzeug befindlichen Sensoren (120) und Aktoren (122) verbunden ist;

Senden einer Messgerätdatenanforderung von dem Client-Gerät (110) an das lokale Gerät (112);

Abrufen, durch das lokale Gerät (112), der Messgerätdaten von der Automobilsteuerung (114) auf Basis der Messgerätdatenanforderung;

Übertragen, durch das lokale Gerät (112), der Messgerätdaten an das Client-Gerät (110);

Anzeigen von Messgerätdaten, die von dem lokalen Gerät (112) empfangen wurden, auf einer Messgerätansicht einer mehrfachen Messgerätansicht in einer Benutzeroberfläche auf dem Client-Gerät (110);

Senden einer weiteren Fahrzeugdatenanforderung von dem Client-Gerät (110) an das lokale Gerät (112);

Abrufen, durch das lokale Gerät (112), der weiteren Fahrzeugdaten von der Automobilsteuerung (114) auf Basis der weiteren Fahrzeugdatenanforderung;

Übertragen, durch das lokale Gerät (112), der weiteren Fahrzeugdaten an das Client-Gerät (110) zur Anzeige durch das Client-Gerät (110);

Übertragen, durch das Client-Gerät (110), einer Anforderung von aktualisierten Motorparametern an den Systemserver (102) auf Basis der weiteren Fahrzeugdaten;

Empfangen einer Antwort von dem Systemserver (102), die die aktualisierten Motorparameter und aktualisierte Firmware beinhaltet;

Treffen, an dem Client-Gerät (110), einer Auswahl eines oder mehrerer der aktualisierten Parameter und der aktualisierten Firmware;

Senden, durch das Client-Gerät (110), der Auswahl des einen oder mehrerer der aktualisierten Parameter und der aktualisierten Firmware an das lokale Gerät (112);

Empfangen, an dem lokalen Gerät (112), des einen oder mehrerer der aktualisierten Parameter und der aktualisierten Firmware von dem Client-Gerät (110);

Laden des einen oder mehrerer der aktualisierten Parameter und der aktualisierten Firmware auf die Automobilsteuerung (114); und

Empfangen von Parameterkennungsdaten von dem lokalen Gerät (110) nach erfolgtem Laden der aktualisierten Firmware auf die Automobilsteuerung (114) durch das lokale Gerät (110).

**12.** Verfahren nach Anspruch 11, ferner umfassend:

Senden einer Parameterkennungsanforderung, an das lokale Gerät (112), von Parameterkennungsdaten; und bevorzugt

Empfangen der Parameterkennungsdaten von dem lokalen Gerät (112) nach erfolgtem Aufzeichnen der Parameterkennungsanforderung durch das lokale Gerät (112).

**13.** Verfahren nach Anspruch 12, ferner umfassend:

Senden einer Motorprüfanforderung an das lokale Gerät (112); und bevorzugt
Empfangen einer Motorprüfantwort von dem lokalen Gerät (112), wobei die Motorprüfantwort bevorzugt einen Motorcode und eingefrorene Daten im Zusammenhang mit dem Motorcode umfasst.

**14.** Verfahren nach Anspruch 13, ferner umfassend:
Anzeigen des Motorcodes.

**15.** Verfahren nach Anspruch 14, ferner umfassend:

Senden des Motorcodes und der eingefrorenen Daten an einen Systemserver (102);
Senden einer Anforderung von aktualisierter Firmware an den Systemserver (102) auf Basis des Motorcodes;
Speichern der aktualisierten Firmware auf dem Client-Gerät (110);
Empfangen einer Auswahl einer aktualisierten Motoreinstellung durch das Client-Gerät (110) von einem Benutzer des Client-Geräts (110); und
Einbeziehen der aktualisierten Motoreinstellung in der aktualisierten Firmware.


**Revendications**

**1.** Un procédé à utiliser avec un dispositif local (112) qui est connecté directement par une connexion câblée à un dispositif de commande d'automobile (114) lequel est connecté par un réseau local de commande à des capteurs (120) et des actionneurs (122) résidant sur un véhicule, dans lequel le procédé consiste à :

établir une connexion de données avec le dispositif de commande d'automobile (114) ;
établir une connexion de réseau sans fil avec un dispositif client (110) qui agit en tant que client d'un serveur de système (102) et en tant que client du dispositif local (112) ;
envoyer une première demande de données de véhicule du dispositif client (110) au dispositif local (112) ;
extraire, par le dispositif local (112), les premières données de véhicule du dispositif de commande d'automobile (114) sur la base de la première demande de données de véhicule ;
transmettre, par le dispositif local (112), les premières données de véhicule au dispositif client (110) pour les afficher par le dispositif client (110) ;
envoyer une deuxième demande de données de véhicule du dispositif client (110) au dispositif local (112) ;
extraire, par le dispositif local (112), les deuxièmes données de véhicule du dispositif de commande d'automobile (114) sur la base de la deuxième demande de données de véhicule ;
transmettre, par le dispositif local (112), les deuxièmes données de véhicule au dispositif client (110) pour les afficher par le dispositif client (110) ;
transmettre, par le dispositif client (110), une demande de paramètres de moteur mis à jour au serveur de système (102) sur la base des deuxièmes données de véhicule ;
recevoir, au dispositif client (110), les paramètres de moteur mis à jour et le micrologiciel mis à jour ;
faire, au dispositif client (110), une sélection du ou des paramètres mis à jour et du micrologiciel mis à jour ;
recevoir, au dispositif local, la sélection du ou des paramètres mis à jour et du micrologiciel mis à jour du dispositif client (110) ; et
charger la sélection du ou des paramètres mis à jour et du micrologiciel mis à jour sur le dispositif de commande d'automobile (114).

**2.** Le procédé selon la revendication 1, consistant en outre à :

recevoir une demande d'identificateur de paramètre du dispositif client (110) ;
enregistrer la demande d'identificateur de paramètre ; et
recevoir des données d'identificateur de paramètre du dispositif de commande d'automobile (114) qui se rapportent à la demande d'identificateur de paramètre.

**3.** Le procédé selon la revendication 2 :
dans lequel la demande d'identificateur de paramètre se rapporte à un capteur de soit la température du liquide de refroidissement du moteur, la vitesse, les tours par minute, la tension de la batterie, la température de la transmission, la pression de suralimentation, la charge calculée, la pression d'injection, la largeur d'impulsion d'injection et la position de l'accélérateur.

**4.** Le procédé selon la revendication 3, consistant en outre à :
envoyer les données d'identificateur de paramètre au dispositif client (110) après avoir enregistré la demande d'identificateur de paramètre.

**5.** Le procédé selon la revendication 4, consistant en outre à :
recevoir une demande de vérification de moteur du dispositif client (110).

**6.** Le procédé selon la revendication 5, consistant en outre à :

extraire un code de moteur du dispositif de commande d'automobile (114) ; et
extraire des données gelées associées au code de moteur du dispositif de commande d'automobile (114).

**7.** Le procédé selon la revendication 6, consistant en outre à :
envoyer une réponse de vérification de moteur au dispositif client (110) qui inclut le code de moteur et les données gelées.

**8.** Un procédé à utiliser avec un serveur de système, le procédé consistant à :

recevoir des données de moteur d'un dispositif client qui agit en tant que client du serveur de système (102) et en tant que client d'un dispositif local (112), dans lequel les données de moteur ont été générées par un dispositif de commande d'automobile (114) lequel est connecté par un réseau local de commande à des capteurs (120) et à des actionneurs (122) résidant sur un véhicule, et dans lequel les données de moteur ont été communiquées du dispositif de commande d'automobile (114) au dispositif local (112) par une connexion câblée directe entre le dispositif de commande d'automobile (114) et le dispositif local (112) et communiquées du dispositif local (112) au dispositif client (110) par une connexion de réseau sans fil, l'étape de réception des données de moteur consistant à :

envoyer une première demande de données de véhicule du dispositif client (110) au dispositif local (112) ;
extraire, par le dispositif local (112), les premières données de véhicule du dispositif de commande d'automobile (114) sur la base de la première demande de données de véhicule ;
transmettre, par le dispositif local (112), les premières données de véhicule au dispositif client (110) pour les afficher par le dispositif client (110) ;
envoyer une deuxième demande de données de véhicule du dispositif client (110) au dispositif local (112) ;
extraire, par le dispositif local (112), les deuxièmes données de véhicule du dispositif de commande d'automobile (114) sur la base de la deuxième demande de données de véhicule ;
transmettre, par le dispositif local (112), les deuxièmes données de véhicule au dispositif client (110) pour les afficher par le dispositif client (110) ; et
recevoir au serveur de système (102) une demande du dispositif client (110) de paramètres de moteur mis à jour sur la base des deuxièmes données de véhicule ;

envoyer les paramètres de moteur mis à jour et le micrologiciel mis à jour du serveur de système (102) au dispositif client (110) ;
faire, au dispositif client (110), une sélection du ou des paramètres mis à jour et du micrologiciel mis à jour ;
recevoir, au dispositif local (112), la sélection du ou des paramètres mis à jour et du micrologiciel mis à jour du dispositif client (110) ;
charger la sélection du ou des paramètres mis à jour et du micrologiciel mis à jour sur le dispositif de commande d'automobile (114) ; et
recevoir des données de moteur au serveur de système (102) du dispositif client (110) après que le micrologiciel mis à jour est chargé sur le dispositif de commande d'automobile (114).

**9.** Le procédé selon la revendication 8, consistant en outre à :

envoyer une demande à un serveur d'écriture d'étalonnage (118) de micrologiciel mis à jour ; et de préférence recevoir le micrologiciel mis à jour du serveur d'écriture d'étalonnage (118).

**10.** Le procédé selon la revendication 9, consistant en outre à :

recevoir un réglage de moteur mis à jour du dispositif client (110) ; et de préférence

recevoir des données de moteur d'un premier dispositif client (110) après que le réglage de moteur mis à jour est chargé sur le dispositif de commande d'automobile (114).

**11.** Un procédé à utiliser avec un dispositif client (110) qui agit en tant que client d'un serveur de système (102) et en tant que client d'un dispositif local (112), le procédé consistant à :

établir une connexion de réseau sans fil avec le dispositif local (112) lequel est connecté à un dispositif de commande d'automobile (114), le dispositif de commande d'automobile (114) étant connecté par un réseau local de commande à des capteurs (120) et à des actionneurs (122) résidant sur un véhicule ;

envoyer une demande de données de jauge du dispositif client (110) au dispositif local (112) ;

extraire, par le dispositif local (112), les données de jauge du dispositif de commande d'automobile (114) sur la base de la demande de données de jauge ;

transmettre, par le dispositif local (112), les données de jauge au dispositif client (110) ;

afficher des données de jauge reçues du dispositif local (112) sur une vue de jauge d'une vue de plusieurs jauges dans une interface utilisateur sur le dispositif client (110) ;

envoyer une autre demande de données de véhicule du dispositif client (110) au dispositif local (112) ;

extraire, par le dispositif local (112), les autres données de véhicule du dispositif de commande d'automobile (114) sur la base de l'autre demande de données de véhicule ;

transmettre, par le dispositif local (112), les autres données de véhicule au dispositif client (110) pour les afficher par le dispositif client (110) ;

transmettre, par le dispositif client (110), une demande de paramètres de moteur mis à jour au serveur de système (102) sur la base des autres données de véhicule ;

recevoir une réponse du serveur de système (102) qui inclut les paramètres de moteur mis à jour et le micrologiciel mis à jour ;

faire, au dispositif client (110), une sélection du ou des paramètres mis à jour et du micrologiciel mis à jour ;

envoyer, par le dispositif client (110), la sélection du ou des paramètres mis à jour et du micrologiciel mis à jour au dispositif local (112) ;

recevoir, au dispositif local (112), le ou les paramètres mis à jour et le micrologiciel mis à jour du dispositif client (110) ;

charger le ou les paramètres mis à jour et le micrologiciel mis à jour sur le dispositif de commande d'automobile (114) ; et

recevoir des données d'identificateur de paramètre du dispositif local (110) après que le micrologiciel mis à jour est chargé sur le dispositif de commande d'automobile (114) par le dispositif local (110).

**12.** Le procédé selon la revendication 11, consistant en outre à :

envoyer une demande d'identificateur de paramètre au dispositif local (112) pour des données d'identificateur de paramètre ; et de préférence

recevoir les données d'identificateur de paramètre du dispositif local (112) après que la demande d'identificateur de paramètre est enregistrée par le dispositif local (112).

**13.** Le procédé selon la revendication 12, consistant en outre à :

envoyer une demande de vérification de moteur au dispositif local (112) ; et de préférence

recevoir une réponse de vérification de moteur du dispositif local (112), dans lequel la réponse de vérification de moteur comprend de préférence un code de moteur et des données gelées associées au code de moteur.

**14.** Le procédé selon la revendication 13, consistant en outre à :
afficher le code de moteur.

**15.** Le procédé selon la revendication 14, consistant en outre à :

envoyer le code de moteur et les données gelées à un serveur de système (102) ;

envoyer une demande de micrologiciel mis à jour au serveur de système (102) sur la base du code de moteur ;

stocker le micrologiciel mis à jour sur le dispositif client (110) ;

recevoir une sélection d'un réglage de moteur mis à jour par le dispositif client (110) d'un utilisateur du dispositif client (110) ; et

inclure le réglage de moteur mis à jour dans le micrologiciel mis à jour.

100

116

118

108

DEALER
SERVER

CLIENT DEVICE 110

CALIBRATION
WRITER SERVER

INTERNET

LOCAL DEVICE 112

104 WEB
SERVER

AUTOMOTIVE
ONBOARD
CONTROLLER 114

106 DATABASE

SYSTEM
SERVER 102

S 120   S 120   A 122   A 122

FIG. 1

FIG. 2A

FIG. 2B

FIG. 3

300

302 HOME PAGE

304 CALIBRATION WRITERS
PHOTO/LOGO
NAME
PHONE
ADDRESS
START DATE
EMAIL
SUBMIT COMPUTER CAL/PID

306 DEALERS
PHOTO/LOGO
NAME
PHONE
ADDRESS
START DATE
EMAIL

308 CUSTOMERS
PHOTO OPTION
PHONE
START DATE
EMAIL

310 VEHICLES
VIN
ECU SERIAL #
MAKE
MODEL
ENGINE
FUEL TANK 1 OR 2
GEAR RATIO
TIRE SIZE
VEHICLE MODIFICATIONS

312 CUSTOMER PROFILES
CALIBRATION, PID CONFIGURATION AND WARNINGS
ALL VEHICLE OPTIONS WHEN CP ID# MADE
DATALOG RECORDINGS

INFORMATION IN COMPUTER PROFILE WILL PREPOPULATE "VEHICLE INFO"

CALIBRATION WRITER WILL SUBMIT ALL INFO FOR COMPUTER PROFILE

FIG. 4A

EP 3 332 344 B1

FIG. 4B

502

GAUGE SCREEN

| Eng. Coolant Temp | Speed | RPM | Battery Voltage |
|---|---|---|---|
| 542 156.0 | 544 31.0 | 746 546 | 2.00 548 |
| 558 °F | 560 MPH | RPM 562 | V 564 |
| Transmission Temp. 534 | Throttle Position Sensor 536 | Calculated Load 538 | Injector Pressure 540 |
| 550 219.0 | 552 35 | 35 554 | 25.0 556 |
| 566 °F | 568 % | % 570 | kPSI 572 |

518 520 **FIG. 5A** 522 524

DRAG AND DROP

≡ Z LYNK

524

| Eng. Coolant Temp | Speed | Injector Pressure | Battery Voltage |
|---|---|---|---|
| -16.0 | 70.0 | 22.0 | 1.00 |
| °F | MPH | kPSI | RPM 1031 RPM |
| Transmission Temp. | Throttle Position Sensor | Calculated L | 514 |
| 83.0 | 74 | 74 | |
| °F | % | % | |

**FIG. 5B**

502

SELECT GAUGE

| ☰ 510 | 512 | ☰Z LYNK | 604 | 606 |

| Speed | RPM | RPM, RPM |
| 148.0 | 865 | 865 RPM |
| MPH | RPM | |
| Transmission Temp. | Throttle Position Sensor | |
| 290.0 | 53 | |
| °F | % | |

608 · 610 · 518 · 520

**FIG. 6A**

502

SLIDE TOP 4 GAUGES

| ☰ 510 | 512 | 514 | ☰Z LYNK | 604 | 606 |

| peed | RPM | Batte | RPM, RPM |
| 0.0 | 1360 | 18 | 1360 RPM |
| MPH | RPM | | |
| Transmission Temp. | Throttle Position Sensor | |
| 288.0 | 43 | |
| °F | % | |

608

**FIG. 6B**

502

SLIDE BOTTOM 4 GAUGES

≡ Z LYNK

604    606

| Speed | RPM | RPM, RPM |
|---|---|---|
| 144.0 | 1463 | |
| MPH | RPM | |

3000
2000    4000
1000    5000
1464
610    RPM    6000
0
P/N

| culated Load | Injector Pressure | |
|---|---|---|
| 45 | 21.0 | |
| % | kPSI | |

522    524    **FIG. 6C**

502

SELECT PID BY SLIDING UP (OR DOWN)

512    ≡ Z LYNK

604    606

| Speed | RPM | RPM, RPM |
|---|---|---|
| 105.0 | 1653 | |
| MPH | RPM | |

3000
2000    4000
1000    5000
1653
RPM    6000
0
P/N

| Transmission Temp. | Throttle Position Sensor | |
|---|---|---|
| -38.0 | 59 | |
| °F | % | |

**FIG. 7A**

SELECT PID BY SLIDING UP (OR DOWN)

| | | 512 | ☰Z LYNK | 606 |
|---|---|---|---|---|

| Speed | **RPM** | 1000 | 1663 | 5000 |
|---|---|---|---|---|
| 229.0 | **1663** | | RPM | |
| MPH | **RPM** | 0 | (P/N) | 6000 |
| | | | 3 of 40 | |

BATTERY VOLTAGE, V ⚙

| Transmission Temp. | Throttle Position Sensor |
|---|---|
| 86.0 | 82 |
| °F | % |

8.00  10.00

6.00          12.00

4.00          14.00

## FIG. 7B

706

SELECT PID BY SLIDING UP (OR DOWN)

| | | 712 | ☰Z LYNK | 706 |
|---|---|---|---|---|

| Speed | **Battery Voltage** | BATTERY VOLTAGE, V ⚙ |
|---|---|---|
| 272.0 | **14.00** | 8.00  10.00 |
| MPH | **V** | 6.00     12.00 |

4.00          14.00

2.00          16.00

| Transmission Temp. | Throttle Position Sensor |
|---|---|
| 129.0 | 24 |
| °F | % |

14.00

0.00          18.00

V

(R)

## FIG. 7C

502

SELECTING FIRST GAUGE STYLE

| | ≡ Z LYNK | |
|---|---|---|
| Speed | RPM | 808 ～ RPM, RPM ～ 810    812 ～ ✕   804 |
| 293.0 | 1613 | GAUGE STYLE |
| MPH | RPM | LEVELS ～ 802 |
| Throttle Position Sensor | Calculated Load | Adjust parameters    > |
| 93 | 93 | Units |
| °F | % | RPM |

## FIG. 8A

SELECTING FIRST GAUGE STYLE

| | ≡ Z LYNK | |
|---|---|---|
| Speed | RPM | 816 ～ RPM, RPM ～ 818    606   806 |
| 148.0 | 865 | 826 ～ 3000 |
| MPH | RPM | 2000   4000 |
| Transmission Temp. | Throttle Position Sensor | 1000   820   865   5000 |
| 290.0 | 53 | 824 ～ 822 ～ RPM   6000 |
| °F | % | 814   0   R ～ 824 |

## FIG. 8B

SELECTING SECOND GAUGE STYLE

| | | |
|---|---|---|
| ☰ | ☰Z LYNK | 804 |

| Speed | **RPM** | RPM, RPM ✕ |
|---|---|---|
| 197.0 | **1818** | GAUGE STYLE ⌐902 |
| MPH | **RPM** | |
| Throttle Position Sensor | Calculated Load | LEVELS |
| 96 | 96 | Adjust parameters > |
| % | % | Units |
| | | RPM |

## FIG. 9A

SELECTING SECOND GAUGE STYLE

| | | |
|---|---|---|
| ☰ | ☰Z LYNK | 606 |

| Speed | **RPM** | RPM, RPM ⚙ |
|---|---|---|
| 230.0 | **1851** | 904        908 |
| MPH | **RPM** | 1500  3000  4500 |
| Throttle Position Sensor | Calculated Load | 906  0        6000 |
| 28 | 28 | 1851 |
| °F | % | RPM (P/N) |

## FIG. 9B

SELECTING THIRD GAUGE STYLE

| Speed | RPM | RPM, RPM 1002 ✕ |
|---|---|---|
| 274.0 | 1895 | GAUGE STYLE |
| MPH | RPM | |

804

LEVELS

Adjust parameters >

| Throttle Position Sensor | Calculated Load | Units |
|---|---|---|
| 72 | 72 | RPM |
| % | % | |

## FIG. 10A

SELECTING THIRD GAUGE STYLE

| Speed | RPM | RPM, RPM ⚙ |
|---|---|---|
| 3.0 | 1925 | 606 |
| MPH | RPM | |
| Throttle Position Sensor | Calculated Load | 6000 4500 3000 1500 0 |
| 0 | 0 | 1925 RPM |
| % | % | 1008 1006 1004 (P/N) |

## FIG. 10B

SELECTING FOURTH GAUGE STYLE

| Speed | RPM | RPM, RPM |
|---|---|---|
| 61.0 | 1983 | **GAUGE STYLE** |
| MPH | RPM | |
| Throttle Position Sensor | Calculated Load | **LEVELS** |
| 59 | 59 | Adjust parameters > |
| % | % | **Units** |
|  |  | RPM |

804 · 1102 · ✕

## FIG. 11A

SELECTING FOURTH GAUGE STYLE

| RPM | Battery Voltage | RPM, RPM ⚙ |
|---|---|---|
| 2787 | 5.00 | ⟋ Actual |
| RPM | V | 2787 |
| Transmission Temp. | Throttle Position Sensor | RPM |
| 64.0 | 54 | 5,000 ── |
| °F | % | 0 ── |
|  |  | 12:09:18 |

606 · 1104

## FIG. 11B

502

ADJUST PARAMETERS

| ☰ | ☰Z LYNK | 604 606 |
|---|---|---|
| Speed 228.0 MPH | **RPM** **1214** **RPM** | |
| Transmission Temp. 212.0 °F | Throttle Position Sensor 7 % | |

816 ~ RPM, RPM ~ 818
826 ~ 3000
2000  4000  806
1000  1202
5000
824 ~
0  1214  6000
RPM
P/N

FIG. 12A

ADJUST PARAMETERS

| ☰ | ☰Z LYNK | 804 |
|---|---|---|
| Speed 293.0 MPH | **RPM** **1613** **RPM** | RPM, RPM ✕ |
| Throttle Position Sensor 93 % | Calculated Load 93 % | |

GAUGE STYLE

LEVELS

Adjust parameters  1204  >

Units

RPM

FIG. 12B

1206

ADJUST PARAMETERS

Cancel ～ 1208    LEVELS    1210 ～ Done

1212 ～ RPM, RPM ～ 1214

1216 ～ ☑ DESIRED

1218    1220

2700    3250

0    6000 RPM

1222 ～ ☑ WARNING

1224    1226

2475    3450

0    6000 RPM

1228 ～ ☑ DEFUEL

1230    1232

2000    3875

0    6000 RPM

## FIG. 12C

ADJUST PARAMETERS

Cancel    LEVELS    Done

RPM, RPM

☑ DESIRED

1218    1220

1700    4075

0    6000 RPM

☑ WARNING

1224    1226

1700    4075

0    6000 RPM

☑ DEFUEL

1230    1232

1700    4075

0    6000 RPM

## FIG. 12D

ADJUST PARAMETERS

Cancel      LEVELS      Done

RPM, RPM

☑ DESIRED

1218      1220

2300      3775

0           6000 RPM

☑ WARNING

1224      1226

2300    3775

0           6000 RPM

☑ DEFUEL

1700     4075

0           6000 RPM

## FIG. 12E

ADJUST PARAMETERS

Cancel      LEVELS      Done

RPM, RPM

☑ DESIRED

2300      3775

0           6000 RPM

1224        1226

☑ WARNING

1400      4350

0           6000 RPM

1230        1232

☑ DEFUEL

1400      4350

0           6000 RPM

## FIG. 12F

ADJUST PARAMETERS

LEVELS

RPM, RPM

Cancel                                                                                    Done

1218          1220

☑ DESIRED

2500          3625

0                                                                    6000 RPM

1224          1226

☑ WARNING

2500    3625

0                                                                    6000 RPM

1230          1232

☑ DEFUEL

2500    3625

0                                                                    6000 RPM

## FIG. 12G

UNCHECK "DESIRED"

LEVELS

RPM, RPM

Cancel                                                                                    Done

1216                                                                  1210

☐ DESIRED

2800  3200

0                                                                    6000 RPM

☑ WARNING

600                              4000

0                                                                    6000 RPM

☑ DEFUEL

0                                              6000

0                                                                    6000 RPM

## FIG. 12H

UNCHECK "DESIRED"

| Speed | **RPM** | RPM, RPM |
|---|---|---|
| 85.0 | **188** | |
| MPH | **RPM** | |
| Transmission Temp. | Throttle Position Sensor | |
| 175.0 | 20 | |
| °F | % | |

606

3000
2000    4000
1000    5000
188
0    RPM    6000
P

FIG. 12I

502

SELECT UNITS

| RPM | Battery Voltage | TRANSMISSION TE... ✕ |
|---|---|---|
| 3757 | 16.00 | GAUGE STYLE |
| RPM | V | |
| **Transmission Temp.** | Throttle Position Sensor | LEVELS |
| **158.0** | 13 | Adjust parameters > |
| 566 °F | % | Units  1304  °F |

604    804

1302 °C

518

FIG. 13A

40

SELECT UNITS

| ≡ | Z LYNK | |
|---|---|---|
| RPM<br><br>3799<br><br>RPM | Battery Voltage<br><br>12.00<br><br>V | TRANSMISSION TE... ✕<br>GAUGE STYLE |
| **Transmission Temp.**<br><br>**88.9**<br><br>566～ **°C** | Throttle Position Sensor<br><br>55<br><br>% | LEVELS<br>Adjust parameters >|

GAUGE STYLE row icons; LEVELS: Adjust parameters >; Units: °C ⌐1302  °F～1304

518

## FIG. 13B

502

SLIDE FOR ALTERNATE DISPLAY

508

| ≡ | Z LYNK | | |
|---|---|---|---|
| °F | MPH | RPM | V |
| Transmission Temp.<br><br>127.0<br><br>°F | Throttle Position Sensor<br><br>96<br><br>% | Calculated Load<br><br>96<br><br>% | Injector Pressure<br><br>46.0<br><br>kPSI |
| RPM, RPM<br><br>4144 | 130.0<br>87.5 … 172.5<br>45.0 … Transmission Temp. … 215.0 | | Eng. Coolant Temp, °F<br><br>149.0 |

## FIG. 14A

14101

SLIDE FOR ALTERNATE DISPLAY

14101
14205
14203
14202  ≡Z LYNK
14218
14215 14216  14221
14220
RPM, RPM
14212
14233
14236 14230 14231
14235
Eng. Coolant
Temp, °F
1434
130.0
87.5
172.5
45.0
Transmission
Temp.
215.0
14213
14219
4328
14207
14214
240.0
14217 14225  14229  2.5
274.0
257.5
14239
14232
15.00
14208
299.0
14228
-40.0
°F
300.0
14241
Battery
Voltage, V  14227
1411
14209
R
Speed, MPH
14223 14224
14226
14210
14240
14237 14238

14204

**FIG. 14B**

14301  SELECT GAUGE  14302

≡Z LYNK

14304  14306
Eng.
Coolant
Temp
RPM  Transmission
Temp.
TRANSMISSION TEMP., °F
14309
130.0
87.5  172.5
4394
RPM
270.0
°F
45.0
215.0
-16.0
2.5
257.5
18.00
V
62.0
MPH
-16.0
°F
-40.0
300.0
Battery
Voltage  14308
14305  14303  Speed
14307
P/N

**FIG. 14C**

42

14301　　　EDIT SETTINGS

≡ Z LYNK　　14401

RPM　Transmission Temp.　Eng. Coolant Temp

4777 RPM

7.00 V

Battery Voltage

292.0 °F

14303

125.0 °F

145.0 MPH

Speed

TRANSMISSION TE... ✕

GAUGE STYLE

LEVELS

Adjust parameters　>

Units

14310

°C

°F

FIG. 14D

14301　　　CHANGE UNITS

≡ Z LYNK

RPM　Transmission Temp.　Eng. Coolant Temp

5067 RPM

17.00 V

Battery Voltage

83.9 °C

14303

269.0 °F

134.0 MPH

Speed

TRANSMISSION TE... ✕

GAUGE STYLE

LEVELS

Adjust parameters　>

Units

°C

°F

FIG. 14E

SLIDE TO CHANGE SELECTED GAUGE

14301     14302

**FIG. 15A**

SLIDE TO CHANGE    14302

**FIG. 15B**

1502

SLIDE TO CHANGE SELECTED GAUGE

≡ Z LYNK

RPM   Boost   Eng. Coolant Temp

897 RPM

18.00 V

Battery Voltage

29.0 PSI

1506

1504

161.0 °F

159.0 MPH

Speed

BOOST, PSI

20.0  25.0  30.0

15.0                    35.0

10.0                       40.0

5.0         29.0         45.0

0.0    PSI      50.0

P

1502

## FIG. 15C

SELECT GAUGE

≡ Z LYNK

14306

RPM   Boost  1510  Eng. Coolant Temp

1100 RPM

16.00 V

Battery Voltage

28.0 PSI

1504

263.0 °F

64.0 MPH

Speed

ENG. COOLANT TEMP, °F

45.0  130.0  215.0

-40.0                    300.0

263.0

°F

R

1508

## FIG. 15D

502

1602    VEHICLE MANAGEMENT

| My Gauges 1604 | ☰ 504    508 | ☰ Z LYNK | |
|---|---|---|---|
| My Vehicles 1606 | Eng. Coolant Temp | Speed | R |
| Program 1608 | 265.0 | 4.0 | 17 |
| | °F | MPH | R |
| Diagnostics 1610 | Transmission Temp. | Throttle Position Sensor | Calcula |
| Datalog 1612 | 0.0 | 47 | 4 |
| Settings 1614 | °F | % | |

## FIG. 16A

1616

VEHICLE MANAGEMENT

☰          MY VEHICLES          1618

| 2015 Ford 6.7L ** Demo Mode ** VIN: 1FTFW1CF0FKE18411 | CONNECTED    > |
|---|---|

## FIG. 16B

VEHICLE MANAGEMENT

1620

| < Back | 2015 FORD 6.7L ** DEMO MODE ** |
|---|---|

1622

Shared with
0 technicians

Manage Shares

Current ECU Profile
Unknown ECU profile

Manage ECU Profiles

1624

## FIG. 16C

1626

VEHICLE MANAGEMENT

| < Back | MANAGE SHARES |
|---|---|

1628

2015 Ford 6.7L ** Demo Mode **
VIN: 1FTFW1CF0FKE18411

Shares

SHARED WITH

## FIG. 16D

VEHICLE MANAGEMENT

1630

SHARE VEHICLE WITH TECHNICIAN

< Back

1632

|Technician's email

1636 — OK    1634

q w e r t y u i o p

a s d f g h j k l

⇧ z x c v b n m ⌫

123 ☺ space @ ∘ Done

## FIG. 16E

502

DIAGNOSTICS

1602

| My Gauges | ≡ | ≡Z·LYNK |
|---|---|---|
| My Vehicles | Eng. Coolant Temp | Speed | R |
| Program | 265.0 | 4.0 | 17 |
| | °F | MPH | R |
| Diagnostics — 1610 | Transmission Temp. | Throttle Position Sensor | Calcula |
| Datalog | 0.0 | 47 | 4 |
| Settings | °F | % | |

## FIG. 17A

DIAGNOSTICS

1702

DIAGNOSTICS DEFINITION OF CODES

1704

≡

[P] Engine and automatic transmission

0003 Fuel Volume Regulator Control Circuit Low

0004 Fuel Volume Regulator Control Circuit High

[U] Electronic system

2001 Lost communication with BCM

[C]

## FIG. 17B

DIAGNOSTICS

1702

DIAGNOSTICS DEFINITION OF CODES

≡

0004 Fuel Volume Regulator Control Circuit High

[U] Electronic system

2001 Lost communication with BCM

[C]

[B]

2201 Not sure?

## FIG. 17C

502

1602

DATALOG

| My Gauges | ≡ | ≡ Z LYNK |
|---|---|---|
| My Vehicles | Eng. Coolant Temp | Speed | R |
| Program | 265.0 | 4.0 | 17 |
| | °F | MPH | R |
| Diagnostics | Transmission Temp. | Throttle Position Sensor | Calcula |
| Datalog 1612 | 0.0 | 47 | 4 |
| Settings | °F | % | |

## FIG. 18A

1802

DATALOG

DATALOG

1804

≡

☐ 21/06/2016 12:22:32

Send

1806

## FIG. 18B

502

SETTINGS

| My Gauges | ≡ | | ≡Z LYNK |
|---|---|---|---|
| My Vehicles | Eng. Coolant Temp | Speed | R |
| Program | 265.0 | 4.0 | 17 |
| | °F | MPH | R |
| Diagnostics | Transmission Temp. | Throttle Position Sensor | Calcula |
| Datalog | 0.0 | 47 | 4 |
| Settings ⟋ 1614 | °F | % | |

FIG. 19A

1902

SETTINGS

≡ SETTINGS Log Out

CONTACT INFORMATION 1904

| Tom Wood tjw5431@gmail.com | > |
|---|---|

HELP 1906

[ i View tutorial ]

1908

[ Send application logs via email ]

ABOUT

FIG. 19B

SETTINGS

| ☰ | SETTINGS | Log Out |
|---|---|---|

ABOUT

App version                    1910 ⁓ 1.0.310

Firmware version               1912 ⁓ 10.00.03

RSSI                           1914 ⁓ 35

DEBUG SETTINGS

## FIG. 19C

SETTINGS

| ☰ | SETTINGS | Log Out |
|---|---|---|

RSSI                           36

DEBUG SETTINGS                 1916

Server IP                      200.100.200.1

Connect to server    1918 ⁓ ◯  1920

Client protocol version    | 17 | 18 | 19 |

## FIG. 19D

20100

## SERVER DATABASE

| VEHICLES | 20102 |
| TECHNICIANS | 20104 |
| ECU PROFILES | 20106 |

## FIG. 20A

20200

### VEHICLE RECORD

| VIN | 20202 |
| YEAR | 20204 |
| MAKE | 20206 |
| MODEL | 20208 |
| TECHNICIANS | 20210 |
| ECU PROFILES | 20212 |

## FIG. 20B

20300

### TECHNICIAN RECORD

| NAME | 20302 |
| EMAIL | 20304 |
| VEHICLES | 20308 |
| CLIENT DEVICE DATA | 20310 |

## FIG. 20C

20400

### ECU PROFILE RECORD

| FIRMWARE | 20402 |
|   CODE | 20404 |
|   SETTINGS | 20406 |
| PARAMETER(S) | 20408 |
|   PID | 20410 |
|   NAME | 20412 |
|   DESIRED MAX | 20414 |
|   DESIRED MIN | 20416 |
|   WARNING MAX | 20418 |
|   WARNING MIN | 20420 |
|   DEFUEL MAX | 20422 |
|   DEFUEL MIN | 20424 |
|   GAUGE STYLE | 20426 |
|   AVAILABLE UNITS | 20428 |
|   SELECTED UNITS | 20430 |

## FIG. 20D

2102

2104

| SMT TESTPADS | I2C0 |
| DEBUG CONNECTOR FPC050C009-NYZ | UART0 |
| | JTAG |
| | PSWITCH |
| | RESET |

PUSHBUTTON TL3301AF260QG

PUSHBUTTON TL3301AF260QG

SDCARD CONNECTOR 5031821853

SSP0

I.MX28

LCD[D0: D6] LCD_RS — SW1 219-8LPST-CTS

GPIO — DEBUG LED x3 LTST-C171GKT

2106

EM — 1Gbit DDR2 MT47H64M16NF-25E

2116

2108

GPMI — 4Gbit NANDF MT29F4G08ABADAH4

2118

2120

SSP2 — WIFI MODULE SX-SDMGN-2830C

2110

USB0 — USB MICRO AB CONNECTOR 10104111-0001LF

2114

2112

CAN1    IO    CAN0

RJ45 CONNECTOR 0438600025

2120

MUX CTRL

CAN XCVR TLE6251DS    CAN0_HI/LOW

CAN1_HI_B/ LOW_B

ANALOG MUX    CAN1_HI_B/ LOW_B

CAN XCVR TLE6251DS

FIG. 21

54

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150007155 A
- US 2010292890 A
- US 2015180840 A
- US 2002007237 A